(19)

Europäisches
Patentamt
European
Patent Office
Office européen
des brevets

(11)  **EP 3 040 197 A1**

(12)  # EUROPEAN PATENT APPLICATION
published in accordance with Art. 153(4) EPC

(43) Date of publication:
**06.07.2016 Bulletin 2016/27**

(21) Application number: **14840117.7**

(22) Date of filing: **29.08.2014**

(51) Int Cl.:
**B32B 7/06** *(2006.01)*    **B32B 27/20** *(2006.01)*

(86) International application number:
**PCT/JP2014/072736**

(87) International publication number:
**WO 2015/030172 (05.03.2015 Gazette 2015/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.08.2013   JP 2013179084**

(71) Applicant: Yupo Corporation
**Tokyo 101-0062 (JP)**

(72) Inventors:
• ZAMA Takahiro
  **Kamisu-shi**
  **Ibaraki 314-0102 (JP)**
• KOIKE Hiroshi
  **Kamisu-shi**
  **Ibaraki 314-0102 (JP)**

(74) Representative: **Zimmermann & Partner
Patentanwälte mbB
Josephspitalstr. 15
80331 München (DE)**

(54)  **EASILY PEELABLE LAMINATE FILM, EASILY PEELABLE LAMINATE LABEL,
HIGH-CONCEALMENT EASILY PEELABLE LAMINATE FILM, AND HIGH-CONCEALMENT
EASILY PEELABLE LAMINATE LABEL**

(57)    An easily peelable laminate film (50), which is formed by laminating a peelable surface layer (20) containing from 18.18 to 89.99% by mass of a thermoplastic resin, from 9.09 to 79.99% by mass of at least one of inorganic fine powder or organic fine powder, and from 0.01 to 4.00% by mass of dispersing agent, and having a peel strength of 5 to 150 g/cm width, and a base layer (10) containing a thermoplastic resin, can be peeled easily without being subjected to special processing for starting the peeling, and also, fine powder is less likely to be shed from the peelable surface layer, and the generation of paper powder at the time of printing is suppressed.

FIG. 1

EP 3 040 197 A1

**Description**

Technical Field

The present invention relates to an easily peelable laminate film comprising a peelable surface layer and a base layer, and an easily peelable laminate label using the same. In particular, the present invention relates to an easily peelable laminate film, an easily peelable laminate label, a high-concealment easily peelable laminate film, and a high-concealment easily peelable laminate label that are highly useful as base materials of delivery slips, concealing seals for postcards and bankbooks, re-sticking preventing labels, indelible seals, stickers for application tickets, coupons, and the like.

Background Art

There has been conventionally such a problem in the food department in supermarkets and department stores that there are persons who peel off the pressure-sensitive adhesive price label of lowered price from the foods on sale whose expiration date is close and replace the price label of foods of normal price with this price label and purchase the foods at a cheaper price. Therefore, a pressure-sensitive adhesive label for preventing re-sticking by which, after the label is peeled off and re-stuck on another article, it is possible to easily determine that this label is a label that has been peeled off before, or a pressure-sensitive adhesive label which cannot be re-stuck on another article has been required and such a label has been put to practical use. However, there are problems in that conventional pressure-sensitive adhesive labels for preventing re-sticking are expensive, an adhesive agent remains on the peeled surface and sticky to the touch after the label is peeled off, or dust adheres to the remaining adhesive agent. Therefore, re-sticking preventing labels that do not leave the adhesive agent on the peeled surface have been developed, and various forms of re-sticking preventing labels have been proposed.

For example, Patent Document 1 discloses a re-sticking preventing label formed by laminating in the order of an adhesive layer, a second layer, a releasing agent layer, and a first layer; when the force required to peel the first layer from the second layer is a, the adhesive force between the adhesive layer and the adherend is b, and the force required to peel the release liner from the adhesive layer is c, the relationship c < a < b being satisfied. In this re-sticking preventing label, since b is greater than a, even when peeling off of the adhered label, which has been adhered to the adherend by the adhesive layer, is attempted, it is only possible to peel off the first layer since the second layer is strongly adhered by the adhesive layer. Therefore, the peeled first layer cannot be re-stuck on another surface since the first layer does not have adhesion. Furthermore, since a released layer, which contains a wax, is left after the first layer is peeled off, it is advantageous that the released surface does not become sticky and does not attract dust.

However, production of this re-sticking preventing label is performed by complicated steps in which, while the adhesive layer is formed on the release liner by a coating method, the releasing agent layer and the second layer are formed sequentially on one main surface of the first layer by a coating method, and then this second layer is laminated on the adhesive layer. Therefore, problems exist in that the production efficiency is low and such a production is not practical. Furthermore, paper was used as the material of the first layer in the working example of Patent Document 1; however, disadvantages exist in that paper is broken easily when brought into contact with water and easily peeled off from the second layer. Therefore, the re-sticking preventing label of this working example has a problem in that the use thereof is limited since the label is not appropriate for adhering on a container containing food products having a large water content, such as pickles and yogurt, or the like.

Furthermore, Patent Document 2 discloses a re-sticking preventing label comprising an interlayer releasable layer (B) formed from a thermoplastic resin biaxially stretched film containing from 10 to 80% by mass of inorganic fine powder and from 90 to 20% by mass of thermoplastic resin, a front surface layer (A) and a back surface layer (C) each formed from a thermoplastic resin film having a thickness of 10 to 500 $\mu$m being laminated by fusion on a front surface and a back surface of the interlayer releasable layer (B), respectively, and a back surface side of the back surface layer (C) having a pressure-sensitive adhesive layer. When the front surface layer (A) of this re-sticking preventing label that is adhered to an adherend is pulled, the interlayer releasable layer (B) causes delamination, and the front surface layer (A) peeled off together with a part of the interlayer releasable layer. At this time, the front surface layer (A) and the interlayer releasable layer (B) do not have adhesion and thus cannot be re-stuck on another surface, and it is also possible to avoid the problem of sticky released surface attracting dust since the interlayer releasable layer (B) is left at the place where the front surface layer (A) has been peeled off.

However, when the inventors of the present invention have evaluated this re-sticking preventing label, although the front surface layer (A) and the back surface layer (C) were easily peeled off once the peeling had started, a defect was found that special processing, such as cutting a notch or a slit only on the back surface layer (C), was necessary to ensure the start of the peeling.

On the other hand, Patent Document 3 proposed an easily peelable laminated film (i) formed by laminating a peelable surface layer (B) having peeling strength of 5 to 150 g/cm width, having a thickness of 0.1 to 10 μm, and being formed from a thermoplastic resin film containing from 10 to 80% by mass of inorganic fine powder and/or organic fine powder and from 90 to 20% by mass of thermoplastic resin, and a base layer (A) being formed from a thermoplastic resin having a thickness of 10 to 500 μm; the easily peelable laminated film (i) being stretched at least in a uniaxial direction after the base layer (A) and the peelable surface layer (B) are laminated. In this easily peelable laminate film (i), the peel strength is controlled to be 5 to 150 g/cm width, and the peelable surface layer (B) contains inorganic fine powder and/or organic fine powder. Therefore, with this easily peelable laminate film (i), the base layer (A) can be easily peeled off even without performing special processing for starting the peeling.

Citation List

Patent Literature

Patent Literature 1: Japanese Unexamined Patent Application Publication No. H8-99377A
Patent Literature 2: Japanese Unexamined Patent Application Publication No. H10-258476A
Patent Literature 3: Japanese Unexamined Patent Application Publication No. 2002-113817A

Summary of Invention

Technical Problem

However, when the inventors of the present invention further investigated the easily peelable laminate film (i) described in Patent Document 3, the easily peelable laminate film (i) contained a large amount of fine powder in the peelable surface layer (B), which is the outermost layer, as a result of controlling the peel strength to be 5 to 150 g/cm width and blending inorganic fine powder or the like in the peelable surface layer (B). Because of this, a problem occurs in that, when this easily peelable laminate film (i) is passed through a printer, the fine powder is readily shed from the peelable surface layer (B). It was thus found that the shed fine powder became "paper powder" and was accumulated in printing devices, such as blankets of offset printing presses and relief printing plates of flexographic printing presses or letterpress printing presses, during the following printing steps, and resulted in failures such that degradation of quality, such as void and deformation of fine patterns in the obtained printed article, tended to happen.
Furthermore, concealability of the easily peelable laminate film (i) described in Patent Document 3 is not sufficient, and defects exist in that, in the cases where the easily peelable laminate film (i) is used in a coupon label or the like which is printed on the both surfaces, when intense light is irradiated from the back surface side (the opposite side relative to the base layer (A)) using a light or the like, the letters and patterns printed on the back surface can be seen through the front surface, and thus the coupon information, which was intended to be concealed, can be seen earlier than the time it is intended to be seen. Furthermore, when the easily peelable laminate film (i) is used as a concealing seal to temporarily conceal private information or the like, similarly, defects exist in that the concealed information can be seen through the seal when a light or the like is used.
Therefore, to resolve these problems of conventional technologies, the inventors of the present invention further investigated to achieve an object of providing an easily peelable laminate film, an easily peelable laminate label, a high-concealment easily peelable laminate film, and a high-concealment easily peelable laminate label that are capable of being easily peeled from a base layer even without performing special processing for starting the peeling and that are less likely to allow fine powder to be shed from the peelable surface layer and thus suppress generation of paper powder during printing.
Furthermore, the inventors of the present invention conducted investigation to provide a high-concealment easily peelable laminate film and a high-concealment easily peelable laminate label in which, even when intense light is irradiated from the back surface side using a light or the like, the information provided on the back surface of the easily peelable laminate film or the information provided below the easily peelable laminate film is not easily seen.

Solution to Problem

As a result of conducting diligent research to solve the above problems, the inventors of the present invention have found that an easily peelable laminate film (i), an easily peelable laminate label (iii), a high-concealment easily peelable laminate film (ii), and a high-concealment easily peelable laminate label (iv), which can be easily peeled off from a base layer and by which shedding of fine powder from a peelable surface layer is suppressed and generation of paper powder during printing is effectively suppressed, are obtained by setting the peel strength to be 5 to 150 g/cm width, by blending from 9.09 to 79.99% by mass of at least one of inorganic fine powder or organic fine powder into the peelable surface layer, and by further adding a dispersing agent to the peelable surface layer. Specifically, the present invention has the following structure.

[1] An easily peelable laminate film (i) formed by laminating a base layer (A) containing at least a thermoplastic resin and a peelable surface layer (B);
the peelable surface layer (B) containing from 18.18 to 89.99% by mass of thermoplastic resin, from 9.09 to 79.99% by mass of at least one of inorganic fine powder or organic fine powder, and from 0.01 to 4.00% by mass of dispersing agent; and the easily peelable laminate film (i) having a peel strength of 5 to 150 g/cm width.

[2] The easily peelable laminate film (i) according to [1], where the dispersing agent contains at least one of acid-modified polyolefin or silanol-modified polyolefin.

[3] The easily peelable laminate film (i) according to [2], where an acid modification ratio of the acid-modified polyolefin is from 0.01 to 20% by mass.

[4] The easily peelable laminate film (i) according to any one of [1] to [3], where the dispersing agent contains maleic anhydride-modified polyolefin.

[5] The easily peelable laminate film (i) according to any one of [1] to [3], where the dispersing agent contains at least one of maleic anhydride-modified polypropylene or silanol-modified polypropylene.

[6] The easily peelable laminate film (i) according to any one of [1] to [5], where the base layer (A) contains from 40 to 100% by mass of the thermoplastic resin and from 0 to 60% by mass of at least one of inorganic fine powder or organic fine powder; and the total content of the fine powders of the inorganic fine powder and the organic fine powder in the base layer (A) is less by 8% by mass or more, than the total content of the fine powders of the inorganic fine powder and the organic fine powder in the peelable surface layer (B).

[7] The easily peelable laminate film (i) according to any one of [1] to [6], where the base layer (A) and the peelable surface layer (B) are stretched in a uniaxial direction in a condition where the base layer (A) and the peelable surface layer (B) are laminated.

[8] The easily peelable laminate film (i) according to any one of [1] to [7], where a film thickness of the base layer (A) is from 10 to 500 $\mu$m, and a film thickness of the peelable surface layer (B) is from 0.1 to 10 $\mu$m.

[9] The easily peelable laminate film (i) according to any one of [1] to [8], where an opacity of the easily peelable laminate film (i) is from 60 to 100%.

[10] A high-concealment easily peelable laminate film (ii) comprising: the easily peelable laminate film (i) described in any one of [1] to [9]; and a recording layer (D) provided via a concealing layer (C) on a surface side, the surface being not in contact with the peelable surface layer (B), of the base layer (A) contained in the easily peelable laminate film (i).

[11] The high-concealment easily peelable laminate film (ii) according to [10], where a total light transmittance is from 0 to 5%.

[12] The high-concealment easily peelable laminate film (ii) according to [10] or [11], where the concealing layer (C) contains from 1 to 80% by mass of colored pigment.

[13] The high-concealment easily peelable laminate film (ii) according to [10] or [11], where the concealing layer (C) has at least two layers which are a colored pigment layer containing from 1 to 80% by mass of colored pigment and an adhesive layer.

[14] The high-concealment easily peelable laminate film (ii) according to [12] or [13], where the concealing layer (C) has at least two layers of colored pigment layers containing from 1 to 80% by mass of colored pigment.

[15] The high-concealment easily peelable laminate film (ii) according to any one of [10] to [14], where the concealing layer (C) contains at least one of black pigment or blue pigment.

[16] The high-concealment easily peelable laminate film (ii) according to [15], where the black pigment contains carbon black.

[17] The high-concealment easily peelable laminate film (ii) according to any one of [10] to [16], where the recording layer (D) contains at least one of natural paper, synthetic paper, or resin films.

[18] The high-concealment easily peelable laminate film (ii) according to any one of [10] to [17], where a film thickness of the concealing layer (C) is from 0.1 to 100 $\mu$m, and a film thickness of the recording layer (D) is from 10 to 500 $\mu$m.

[19] An easily peelable laminate label (iii) comprising the easily peelable laminate film (i) described in any one of [1] to [9]; and a pressure-sensitive adhesive layer that is provided on a surface, the surface being on the opposite side relative to the base layer (A), of the peelable surface layer (B) contained in the easily peelable laminate film (i).

[20] The easily peelable laminate label (iii) according to [19], further comprising a release liner provided on a surface, the surface being on the opposite side relative to the peelable surface layer (B), of the pressure-sensitive adhesive layer.

[21] The easily peelable laminate label (iii) according to [19] or [20], where a stress at start of peeling is 500 g/cm width or less.

[22] A high-concealment easily peelable laminate label (iv) comprising the high-concealment easily peelable laminate film (ii) described in any one of [10] to [17]; and a pressure-sensitive adhesive layer that is provided on a surface, the surface being on the opposite side relative to the base layer (A), of the peelable surface layer (B) contained in the high-concealment easily peelable laminate film (ii).

[23] The high-concealment easily peelable laminate label (iv) according to [22], further comprising a release liner provided on a surface, the surface being on the opposite side relative to the peelable surface layer (B), of the pressure-sensitive adhesive layer.

[24] The high-concealment easily peelable laminate label (iv) according to [22] or [23], where a stress at start of peeling is 500 g/cm width or less.

Advantageous Effects of Invention

According to the easily peelable laminate film (i) and the easily peelable laminate label (iii) of the present invention, the base layer (A) can be easily peeled off even without performing special processing for starting the peeling. Shedding of the fine powder from the peelable surface layer (B) can be also suppressed, and thus generation of paper powder during printing can be effectively suppressed. Therefore, on the surfaces of the easily peelable laminate film (i) and the easily peelable laminate label (iii), letters and images can be printed in high quality. Furthermore, according to the high-concealment easily peelable laminate film (ii) and the high-concealment easily peelable laminate label (iv) which are embodiments of the present invention having a concealing layer, it is possible to suppress the visual recognition, through the high-concealment easily peelable laminate film (ii), of letters and patterns that are provided on the back surface thereof (which is a surface on the opposite side relative to the recording layer side surface) and/or letters and patterns that are provided on the surface where the high-concealment easily peelable laminate film (ii) or the high-concealment easily peelable laminate label (iv) is provided.

Therefore, the easily peelable laminate film (i), the easily peelable laminate label (iii), the high-concealment easily peelable laminate film (ii), and the high-concealment easily peelable laminate label (iv) of the present invention can be advantageously used in various applications such as delivery slips, concealing seals, re-sticking preventing labels, indelible seals, stickers for application tickets, and coupons.

Brief Description of Drawings

FIG. 1 is a schematic longitudinal section view for explaining the peeling mechanism of the easily peelable laminate label (iii) of the present invention.

FIG. 2 is a schematic view illustrating an aspect of the easily peelable laminate film (i) of the present invention.

FIG. 3 is a schematic view illustrating an aspect of the high-concealment easily peelable laminate film (ii) of the present invention.

FIG. 4 is a schematic view illustrating another aspect of the high-concealment easily peelable laminate film (ii) of the present invention.

FIG. 5 is a schematic view illustrating yet another aspect of the high-concealment easily peelable laminate film (ii) of the present invention.

Description of Embodiments

Hereinafter, the easily peelable laminate film (i), the high-concealment easily peelable laminate film (ii), the easily peelable laminate label (iii), and the high-concealment easily peelable laminate label (iv) of the present invention will be further described in detail below. Since the high-concealment easily peelable laminate film (ii) is, as described below, a film in which a concealing layer (C) and a recording layer (D) are provided on an easily peelable laminate film (i), the easily peelable laminate film (i) will be representatively explained first.

The descriptions of constituent elements given below are based on typical embodiments of the present invention, but the present invention is not limited to such embodiments.

The easily peelable laminate film (i) of the present invention is composed by laminating a base layer (A) and a peelable surface layer (B) as described above. Furthermore, the easily peelable laminate label (iii) of the present invention is a label in which a pressure-sensitive adhesive layer is provided on the easily peelable laminate film (i), and, as necessary, may further have a release liner or another laminate film.

Easily peelable laminate film (i)

The easily peelable laminate film (i) of the present invention is formed by laminating a base layer (A) containing at least a thermoplastic resin and a peelable surface layer (B). In the easily peelable laminate film (i), the peelable surface layer (B) contains from 18.18 to 89.99% by mass of thermoplastic resin, from 9.09 to 79.99% by mass of at least one of inorganic fine powder or organic fine powder, and from 0.01 to 4.00% by mass of dispersing agent, and the easily peelable laminate film (i) has a peel strength of 5 to 150 g/cm width.

The definition of "peel strength" in the present invention will be explained in the section of "Peel strength of peelable surface layer" described later. Furthermore, the terms "inorganic fine powder" and "organic fine powder" may be collectively referred to as "fine powder" in the explanation below. In the present specification, the numeric ranges expressed using "to" indicate ranges that include the numeric values written before and after the "to" as the lower and upper limit values, respectively.

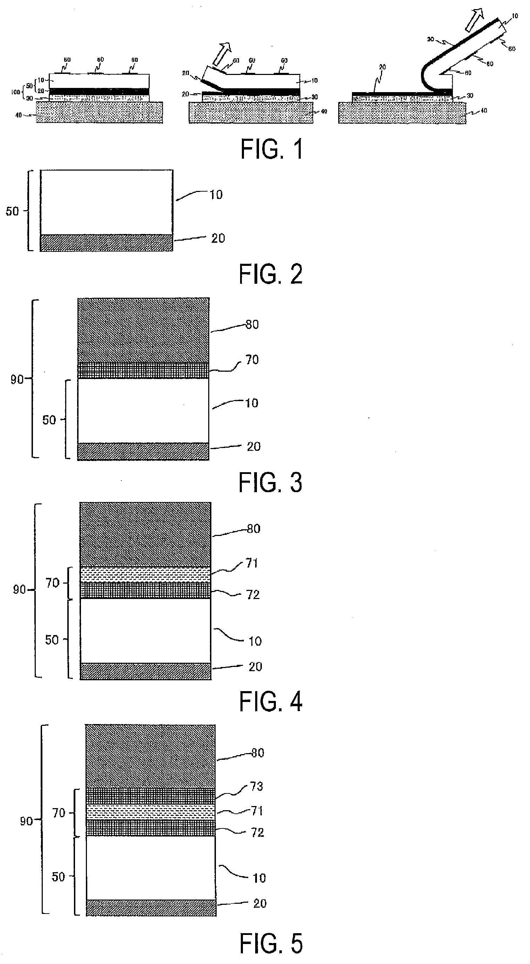

FIG. 2 illustrates an example of the easily peelable laminate film (i) of the present invention. In FIG. 2, 10 is a base layer (A) and 20 is a peelable surface layer (B). Hereinafter, the structure of each part will be described in detail.

Peelable surface layer (B)

The peelable surface layer (B) is a layer containing predetermined contents of a thermoplastic resin, at least one of inorganic fine powder or organic fine powder, and a dispersing agent, and having a peel strength of 5 to 150 g/cm width. This peelable surface layer (B) is composed in a manner that the at least one of inorganic fine powder or organic fine powder is dispersed in the thermoplastic resin, and that the content of the fine powder is adjusted so that the peel strength thereof is from 5 to 150 g/cm width.

Therefore, as illustrated in the peeling mechanism in FIG. 1, when the base layer (A) is pulled while the peelable surface layer (B) is held, delamination (cohesive failure) of the peelable surface layer (B) easily occurs and the base layer (A) peels off together with a part of the peelable surface layer (B). Meanwhile, another part of the peelable surface layer (B) is left at the place where the base layer (A) is peeled off.

Note that, since the dispersing agent is contained in the peelable surface layer (B), aggregation of the inorganic fine powder and/or the organic fine powder is suppressed, and the fine powder is dispersed finely and uniformly in the layer to uniformly form a multiplicity of fine pores. Therefore, this peelable surface layer (B) has less unevenness of peeling strength within the layer and can stably release the base layer (A). That is, with this easily peelable laminate film (i), the base layer (A) can be easily peeled off even without performing special processing for starting the peeling.

The dispersing agent also serves as an adhesive agent that bonds the thermoplastic resin and the fine powder. Therefore, shedding of the fine powder from the peelable surface layer (B) is less likely to occur, and generation of paper powder during printing or the like can be effectively suppressed.

Dispersing agent contained in peelable surface layer

As the dispersing agent contained in the peelable surface layer (B), acid-modified polyolefin, silanol-modified polyolefin, and the like can be exemplified. Among these, use of acid-modified polyolefin is preferred. Examples of the acid-modified polyolefin include acid anhydride group-containing polyolefins formed by subjecting maleic anhydride to random copolymerization or graft copolymerization, carboxylic acid group-containing polyolefins formed by subjecting unsaturated carboxylic acid, such as methacrylic acid and acrylic acid, to random copolymerization or graft copolymerization, epoxy group-containing polyolefins formed by subjecting glycidyl methacrylate to random copolymerization or graft copolymerization, and the like. In particular, use of maleic anhydride-modified polyolefin is preferred. Specific examples include maleic anhydride-modified polypropylene, maleic anhydride-modified polyethylene, acrylic acid-modified polypropylene, ethylene-methacrylic acid random copolymers, ethylene-glycidyl methacrylate random copolymers, ethylene-glycidyl methacrylate graft copolymers, glycidyl methacrylate-modified polypropylene, and the like. Among these, maleic anhydride-modified polypropylene and maleic anhydride-modified polyethylene are preferable, and maleic anhydride-modified polypropylene is more preferable. Among the silanol-modified polyolefin, silanol-modified polypropylene is preferable. One type of these dispersing agents may be used alone or two or more types of these dispersing agents may be used in combination.

Specific examples of the maleic anhydride-modified polypropylene and the maleic anhydride-modified polyethylene include Modic AP P513V (trade name), Modic AP M513 (trade name), and Linklon PP XPM800H (trade name) manufactured by Mitsubishi Chemical Corporation, UMEX 1001 (trade name), UMEX 1010 (trade name), and UMEX 2000 (trade name) manufactured by Sanyo Chemical Industries, Ltd., HPR VR101 (trade name) manufactured by DuPont-Mitsui Polychemicals Co., Ltd., and the like.

The acid modification ratio of the acid-modified polyolefin is preferably 0.01% by mass or greater, and more preferably 0.05% by mass or greater. The acid modification ratio of the acid-modified polyolefin is also preferably 20% by mass or less, and more preferably 15% by mass or less. When the acid modification ratio is 0.01% by mass or greater, even in the case where the inorganic fine powder is surface-treated, the inorganic fine powder can be highly dispersed in the thermoplastic resin. When the acid modification ratio is 20% by mass or less, compounding of the acid-modified polyolefin with the thermoplastic resin becomes relatively easy since the softening point of the acid-modified polyolefin does not become too low. Note that "acid modification ratio" in the present specification refers to a value measured by the method described in working examples later.

The content of the dispersing agent contained in the peelable surface layer (B) is 0.1% by mass or greater, preferably 0.3% by mass or greater, and more preferably 0.8% by mass or greater, from the perspectives of achieving stable peel strength since the inorganic fine powder and/or the organic fine powder is sufficiently dispersed in the thermoplastic resin, and suppressing generation of paper powder due to shedding of the fine powder when the easily peelable laminate film (i) is subjected to printing. On the other hand, when the dispersing agent is excessively contained, the formability of the peelable surface layer (B) is impaired. Specifically, (1) when the peelable surface layer (B) is extrusion-formed, gum (solid component) is attached and accumulated on a lip of a die due to thermal degradation of the thermoplastic resin such as modified polyolefin, (2) the gum is mixed into a product as a foreign material, and (3) inconvenience, including that drawing breakage tends to be easily caused during forming of the like, is caused. Therefore, from the perspectives of suppressing generation and accumulation of gum and achieving both good formability and easy peelability, the content of the dispersing agent contained in the peelable surface layer (B) is 4.00% by mass or less, preferably 3.00% by mass or less, and more preferably 2.50% by mass or less.

Thermoplastic resin contained in peelable surface layer

Examples of the thermoplastic resin include polyolefin-based resins, such as ethylene-based resins, such as high density polyethylene, medium density polyethylene, and low density polyethylene; propylene-based resins, polymethyl-1-pentene and ethylene-cyclic olefin copolymers; polyamide-based resins, such as nylon-6, nylon-6,6, nylon-6,10, and nylon-6,12; thermoplastic polyester-based resins, such as polyethylene terephthalate and copolymers thereof, polyethylene naphthalate, and aliphatic polyester; and thermoplastic resins, such as polycarbonate, atactic polystyrene, syndiotactic polystyrene, and polyphenylene sulfide. One type of these thermoplastic resins may be used alone or two or more types of these thermoplastic resins may be used in combination. Among these, use of polyolefin-based resin(s) is preferred. Furthermore, among polyolefin-based resins, propylene resins, high density polyethylene, and a mixture of a propylene-based resin and high density polyethylene are more preferable from the perspectives of cost, water resistance, and chemical resistance.

As such propylene-based resins, polypropylene that is a propylene homopolymer and that exhibits isotactic or syndiotactic or various degrees of stereoregularity, or copolymers of primarily propylene with an $\alpha$-olefin such as ethylene, butene-1, hexene-1, heptene-1, and 4-methylpentene-1 are preferably used. These copolymers may be bipolymers, terpolymers, or quaterpolymers, and may be random copolymers or block copolymers.

The content of the thermoplastic resin in the peelable surface layer (B) is from 18.18 to 89.99% by mass and can be appropriately selected within this range depending on the content of the inorganic fine powder and/or the organic fine powder. When the content of the thermoplastic resin of the peelable surface layer (B) is less than 18.18% by mass, forming stability is impaired. When the content is greater than 89.99% by mass, sufficient peelability cannot be achieved. The content of the thermoplastic resin is preferably from 24.04 to 84.92% by mass, and more preferably from 38.84 to 64.81% by mass.

Fine powder contained in peelable surface layer

Examples of the inorganic fine powder contained in the peelable surface layer (B) include calcium carbonate, baked clay, silica, diatomaceous earth, talc, titanium oxide, barium sulfate, alumina, and the like.

Furthermore, as the organic fine powder, use of resin powder that is a type different from the thermoplastic resin used in the peelable surface layer (B), that is incompatible with this thermoplastic resin, and that has a melting point of 120°C to 300°C or a glass transition temperature of 120°C to 280°C is preferable. For example, when the thermoplastic resin is a polyolefin-based resin, as the organic fine powder, polyethylene terephthalate, polybutylene terephthalate, polycarbonate, nylon-6, nylon-6,6, cyclic olefin, homopolymers of cyclic olefin, copolymers of cyclic olefin and ethylene, and the like can be used.

One type of these inorganic fine powder or organic fine powder may be used alone or two or more types of these inorganic fine powder and/or organic fine powder may be used in combination. Furthermore, the inorganic fine powder and the organic fine powder may be used in combination.

The average particle size of the inorganic fine powder and the organic fine powder is preferably from 0.01 to 15 $\mu$m, more preferably from 0.05 to 8 $\mu$m, and even more preferably from 0.1 to 4 $\mu$m.

Note that, for inorganic fine powder in the present specification, "average particle size" of "fine powder" refers to a median diameter at 50% cumulative value in the volume-based particle size distribution measured by the laser diffraction method stipulated in JIS-Z8825-1:2001. For organic fine powder and a mixture of inorganic fine powder and organic fine powder, "average particle size" refers to an average value of particle sizes (major axis) of 100 particles of fine powder observed in the observation, using an electron microscope, of the cross section of the peelable surface layer (B) produced by using such an organic fine powder or a mixture of inorganic fine powder and organic fine powder.

The content of at least one of the inorganic fine powder or the organic fine powder contained in the peelable surface layer (B) is from 9.09 to 79.99% by mass, preferably from 14.42 to 74.93% by mass, and more preferably from 33.98 to 59.82% by mass. Note that, in the case where either one of the inorganic fine powder or the organic fine powder is used, the content thereof corresponds to the "content" described above. In the case where the inorganic fine powder and the organic fine powder are combined, the total amount thereof corresponds to the "content" described above. This definition of the content of fine powder also applies to the explanation below. When the content of the inorganic fine powder and/or the organic fine powder is less than 9.09% by mass, sufficient peelability cannot be achieved. When the content of the inorganic fine powder and/or the organic fine powder is greater than 79.99% by mass, forming stability is impaired.

Thickness of peelable surface layer

The layer thickness of the peelable surface layer (B) is preferably approximately from 0.1 to 10 $\mu$m, more preferably from 0.3 to 7 $\mu$m, and even more preferably from 0.5 to 5 $\mu$m. When the thickness of the peelable surface layer (B) is less than 0.1 $\mu$m, sufficient peelability may not be achieved. When the thickness of the peelable surface layer (B) is greater than 10 $\mu$m, transparency of the peelable surface layer (B) decreases although the peeling strength is not affected. Therefore, when the adhered surface of the peelable surface layer (B) has information that needs to be visually recognized, the visibility of the information may decrease. When the peelable surface layer (B) is thick, the releasing surface does not become uniform and tends to be rough. As a result, when a barcode or the like is printed, using the released base layer (A) as a management documentation or the like, problems such as printing failure may occur.

The thickness of the peelable surface layer (B) can be easily controlled by formed thickness of the film material used in the peelable surface layer (B) or by stretching of the film material.

Peel strength of peelable surface layer

In the present invention, the peel strength of the peelable surface layer (B) is set to 5 to 150 g/cm width.

In the present invention, "peel strength of peelable surface layer" is a value measured as described below.

The easily peelable laminate film (i) is stored in a thermostatic chamber (temperature: 20°C; relative humidity: 65%) environment for 12 hours, and then pressure-sensitive adhesive tape is adhered to the peelable surface layer (B) surface using a tape press-bonding device in accordance with the method stipulated in JIS-Z-0237. This assembly is cut into a piece having the width of 20 mm and the length of 200 mm. Thereafter, the stress in the state where the peeling involved with cohesive failure of the peelable surface layer (B) is stable is measured by a load cell by peeling, in a T-shape, the easily peelable laminate film (i) from the pressure-sensitive adhesive tape at a tension rate of 300 mm/min using a tensile tester in accordance with a method stipulated in JIS-K-6854-3.

Here, for example, Cellotape CT-24 (trade name), manufactured by Nichiban Co., Ltd., can be used as the pressure-sensitive adhesive tape, and Autograph (trade name), manufactured by Shimadzu Corporation, can be used as the tensile tester.

The peel strength of the peelable surface layer (B) is a value indicating cohesive force, and a layer having a smaller value of this has smaller cohesive force and is relatively easily broken. Thus, when the peel strength of the peelable surface layer (B) is from 5 to 150 g/cm width, the base layer (A) is easily peeled off completely once the peeling of the base layer (A) is started, and the suitable performances as the easily peelable laminate film (i) are achieved.

When the peel strength of the peelable surface layer (B) is less than 5 g/cm width, peeling is easily caused when the paper is fed and delivered during secondary processing such as printing, typing, and cutting, and thus problems in secondary processability exist. Furthermore, the peel strength of greater than 150 g/cm width is not practical since the peelable surface layer (B) does not peel off or higher stress is required to peel off the peelable surface layer (B). Furthermore, material failure occurs at parts except the peelable surface layer (B), and also the released surface is fluffed. The peel strength of the peelable surface layer (B) is preferably from 10 to 100 g/cm width.

The peel strength of the peelable surface layer (B) can be controlled to be within the range described above by the content of inorganic fine powder and/or organic fine powder and the content of the dispersing agent contained in the peelable surface layer (B), the stretching ratio of the peelable surface layer (B), the void fraction of the multilayer stretched film, and the like.

Base layer

The base layer (A) is a layer containing a thermoplastic resin. The base layer (A) is a layer that is in direct contact with the peelable surface layer (B) and has a higher strength than that of the peelable surface layer (B). Because of this, when the base layer (A) is held and peeled off while the peelable surface layer (B) is held, the base layer (A) does not peel off alone, but the base layer (A) peels off together with a part of the peelable surface layer (B) due to delamination of the peelable surface layer (B).

Thermoplastic resin contained in base layer

As the type of the thermoplastic resin contained in the base layer (A), the description of the types of the thermoplastic resin contained in the peelable surface layer (B) can be referred to.
When at least one of inorganic fine powder or organic fine powder is added to the base layer (A) as described later, the content of the thermoplastic resin in the base layer (A) can be appropriately selected depending on the content of the fine powder. In this case, the content of the thermoplastic resin in the base layer (A) is preferably from 40 to 100% by mass, and more preferably from 50 to 98% by mass.

Fine powder contained in base layer

The base layer (A) may contain at least one of inorganic fine powder or organic fine powder or may contain none of these. When the base layer (A) contains at least one of inorganic fine powder or organic fine powder, as the types and the particle size of the fine powder, the description of the types and the particle sizes of inorganic fine powder and organic fine powder of the peelable surface layer (B) described above can be referred to. Note that the fine powder used in the base layer (A) and the fine powder used in the peelable surface layer (B) may be the same or different.
The content of at least one of the inorganic fine powder or the organic fine powder contained in the base layer (A) is preferably in a range of 0 to 60% by mass, and the content is preferably less by 8% by mass or more, than the content of the fine powder contained in the peelable surface layer (B), from the perspective of making the base layer (A) a layer having a higher strength than that of the peelable surface layer (B). Furthermore, the content of at least one of the inorganic fine powder or the organic fine powder contained in the base layer (A) is more preferably in a range of 2 to 50% by mass, and the content is more preferably less by 10% by mass or more, than the content of the fine powder contained in the peelable surface layer (B).
When the difference in the contents of the fine powders in the base layer (A) and in the peelable surface layer (B) is less than 8% by mass, and when the content of the fine powder in the base layer (A) is greater than that of the peelable surface layer (B), peeling of the peelable surface layer (B) becomes unstable, and also performances as the easily peelable laminate film (i) may not be exhibited since the strength of the base layer (A) becomes smaller than the strength of the peelable surface layer (B).

Thickness of base layer

The thickness of the base layer (A) is preferably approximately from 10 to 500 μm, and more preferably from 20 to 300 μm. When the thickness of the base layer (A) is less than 10 μm, breaking strength of the base layer (A) is low, and desired function cannot be achieved since the base layer (A) is broken in the middle of peeling when the base layer (A) is held and peeled off while the peelable surface layer (B) is held. Furthermore, when the thickness of the base layer (A) is greater than 500 μm, stiffness of the easily peelable laminate film (i) is increased, and thus processing or printing may tend to be difficult when the easily peelable laminate film (i) is used as a concealing seal, re-sticking preventing label, or the like.

Layer structure of base layer

The base layer (A) may have a single layer structure or may have a multilayer structure in which two or more types of layers having different compositions, thicknesses, stretching directions, and the like are laminated. The base layer (A) having a multilayer structure makes it possible to impart various functions, such as writability, printability, thermal transfer printability, opacity, gas barrier properties, abrasion resistance, and secondary processability, while the strength as a supporting medium during peeling is maintained.
When the base layer (A) has a multilayer structure, the layer on the side that is in direct contact with the peelable surface layer (B) (hereinafter, also referred to as "inner side layer (A1)") has the content of at least one of the inorganic fine powder or the organic fine powder is in a range of from 0 to 60% by mass, and the content is preferably less by 8% by mass or more, than the content of the fine powder contained in the peelable surface layer (B). Furthermore, the content of at least one of the inorganic fine powder or the organic fine powder in the inner side layer (A1) is more preferably in a range of from 2 to 50% by mass, and the content is more preferably less by 10% by mass or more, than the content of the fine powder contained in the peelable surface layer (B).

Stretching

In the easily peelable laminate film (i) of the present invention, at least one of the base layer (A) or the peelable surface layer (B) is preferably uniaxially stretched or biaxially stretched, and both the base layer (A) and the peelable surface layer (B) are preferably stretched.

When both of the base layer (A) and the peelable surface layer (B) are stretched, the stretched direction of the base layer (A) and the peelable surface layer (B) may be the same or different. Furthermore, when the base layer (A) has a multilayer structure, a part of the layers may be stretched or all of the layers may be stretched. When a plurality of the layers constituting the base layer (A) is stretched, the stretched directions of the layers may be the same or different.

When both the base layer (A) and the peelable surface layer (B) are stretched, examples of the combination of the numbers of axis of stretching, in terms of [base layer (A)/peelable surface layer (B)], include uniaxial/uniaxial, uniaxial/biaxial, biaxial/uniaxial, and the like. Furthermore, when the base layer (A) has a two-layer structure, examples of the combination, in terms of [base layer (A2)/base layer (A1)/peelable surface layer (B)], include uniaxial/uniaxial/uniaxial, uniaxial/uniaxial/biaxial, uniaxial/biaxial/uniaxial, biaxial/uniaxial/uniaxial, uniaxial/biaxial/biaxial, biaxial/biaxial/uniaxial, biaxial/biaxial/biaxial, and the like.

As the method of stretching, the section of "(2) Laminating and stretching step of film materials" in the section of "Production method of easily peelable laminate film (i)" described later can be referred to.

Voids

In the easily peelable laminate film (i) of the present invention, at least one of the base layer (A) or the peelable surface layer (B) is preferably a porous layer having a multiplicity of fine voids (pores) inside. By this, an easily peelable laminate film (i) that is more flexible than films having no voids can be obtained. The voids may be formed in any one of the base layer (A) or the peelable surface layer (B), or maybe formed in both of them; however, the voids are preferably formed in both the base layer (A) and the peelable surface layer (B). By this, flexibility can be imparted to the entire easily peelable laminate film (i).

The voids can be formed by, for example, stretching the film materials used in the base layer (A) and the peelable surface layer (B). As the degree of formation of voids by stretching, the void fraction determined by the following formula (1) can be used as an indicator.

Formula 1

$$\text{Void fraction (\%)} = \frac{\rho 0 - \rho 1}{\rho 0} \times 100 \quad \cdots (1)$$

ρ0: Density of resin film before stretching
p1: Density of resin film after stretching

In the base layer (A) and the peelable surface layer (B), the void fraction calculated by formula (1) above is preferably from 10 to 60%, and more preferably from 20 to 45%. By adjusting the void fraction of the base layer (A) and the peelable surface layer (B) to be 10% or greater, the peel strength can be easily controlled to be within a range of 5 to 150 g/cm width. Meanwhile, when the void fraction is 60% or less, troubles, such as breaking during stretch forming, are less likely to occur.

Furthermore, the void fractions of the base layer (A) and the peelable surface layer (B) may be the same or different; however, the void fraction of the peelable surface layer (B) is preferably higher than that of the base layer (A). The void fraction and the peel strength are closely related to each other, and the peel strength of the peelable surface layer (B) becomes lower than that of the base layer (A) by setting the void fraction of the peelable surface layer (B) to be higher. As a result, when the base layer (A) is held and peeled off while the peelable surface layer (B) is held, cohesive failure can be easily caused only in the peelable surface layer (B) while breaking of the base layer (A) is suppressed.

Opacity

In the present specification, "opacity" is a value obtained, in accordance with the method stipulated in JIS-P-8138, by placing a black standard plate or a white standard plate as a back surface of a measurement sample and measuring light reflectance of the measurement sample in each condition, and showing the ratio of them (black plate/white plate) in a percentage.

The easily peelable laminate film (i) of the present invention may be transparent, semitransparent, or opaque, and can be adjusted to have appropriate transparency or opacity depending on the purpose of use thereof.

For example, when the easily peelable laminate film (i) is an easily peelable laminate label (iii) having a pressure-sensitive adhesive layer and used after being subjected to secondary processing to produce a concealing label of a postcard or bankbook, re-sticking preventing label, indelible label, or the like, the opacity of the easily peelable laminate film (i) is preferably high so that information to be protected or the like that is provided on the adhered surface of the label or on the peelable surface layer (B) cannot be seen through. The opacity of the easily peelable laminate film (i) can be controlled by the content of the fine powder contained in the base layer (A), the void fraction of the easily peelable laminate film (i), or the like.

Specifically, the opacity of the easily peelable laminate film (i) is preferably from 60 to 100%, more preferably from 70 to 100%, and even more preferably from 85 to 100%. If the opacity is less than 60%, when the easily peelable laminate film (i) is used as a concealing label or the like, the information to be protected can be seen through the film and sufficient concealing performance cannot be obtained.

Production method of easily peelable laminate film (i)

Next, an example of the method of producing the easily peelable film of the present invention will be described. This method of producing the easily peelable film comprises a resin composition forming step and a laminating and stretching step of film materials.

Hereinafter, each step will be described.

(1) Resin composition forming step

In this step, a film material for the base layer and a film material for the peelable surface layer are obtained by separately forming a resin composition obtained by melt-kneading raw materials of the base layer (A) described above and a resin composition obtained by melt-kneading raw materials of the peelable surface layer (B) described above, into a sheet shape.

The method of forming the resin composition is not particularly limited, and various publicly known methods can be used. Specific examples include cast forming, in which a molten resin composition is extruded in a sheet shape using a single layer or multilayer T-die or I-die that is connected to a screw extruder, inflation forming, in which a molten resin is extruded in a tube shape using a circular die and then inflated by the internal air pressure, calendar forming, in which kneaded raw materials are rolled by a plurality of heat rolls to form a sheet shape, roll forming, and the like.

(2) Laminating and stretching step of film materials

In this step, an easily peelable laminate film (i) is obtained by superimposing and joining the film material for the base layer and the film material for the peelable surface layer produced in step (1) described above and, as necessary, by stretching.

The method of laminating the film materials is not particularly limited, and various publicly known methods can be used. Specific examples of the laminating method include a multilayer die method using a feed block or multi-manifold, extrusion lamination method using a plurality of dies, and the like. A combination of a multilayer die method and extrusion lamination method may also be used.

Although the stretching is a step that is performed as necessary, it is preferable to stretch both the film material for the base layer and the film material for the peelable surface layer at least in uniaxial direction.

When the stretching step is performed, although the step may be performed by separately stretching the film material for the base layer and the film material for the peelable surface layer and then laminating the film materials, or by laminating the film materials to form a laminate film and then stretching this laminate film; however, the stretching step is preferably performed by the latter procedure. Since the peelable surface layer (B) has low strength and smaller thickness, it is extremely difficult to stretch the film material for the peelable surface layer alone. On the other hand, if stretching is performed after the film material for the base layer and the film material for the peelable surface layer are laminated, the film material for the peelable surface layer can be easily stretched simultaneously with the film material for the base layer.

As the method of stretching the film materials, any one of or a combination of typically used various methods can be used. As specific examples of the stretching method, when a cast formed film is stretched as a film material, machine-direction stretching utilizing the circumferential speed differential of a group of rollers, transverse-direction stretching using a tenter oven, sequential biaxial stretching which combines machine-direction stretching and transverse-direction stretching, simultaneous biaxial stretching by a combination of a tenter oven and a linear motor, simultaneous biaxial stretching by a combination of a tenter oven and a pantograph, rolling, and the like can be used. Furthermore, when an inflation formed film is stretched as a film material, simultaneous biaxial stretching by a tubular method can be used.

Stretching ratio in the stretching step is not particularly limited, and is appropriately selected depending on the characteristics of the thermoplastic resin contained in the film material or the like. For example, when the thermoplastic resin of the film material is a propylene homopolymer or copolymer thereof and this film material is stretched in a uniaxial direction, the stretching ratio is typically from 1.2 to 12-fold, and preferably from 2 to 10-fold. Furthermore, when this material sheet is stretched biaxially, the stretching ratio, in terms of area ratio, is typically from 1.5 to 60-fold, and preferably from 4 to 50-fold. When a film material containing another thermoplastic resin is stretched uniaxially, the stretching ratio is typically from 1.2 to 10-fold, and preferably from 2 to 5-fold, and when this film material is stretched biaxially, the area ratio is typically from 1.5 to 20-fold, and preferably from 4 to 12-fold.

Stretching temperature of the film material can be selected from the range that is from the glass transition temperature of the thermoplastic resin contained in the film material to the melting point of the crystal part of the thermoplastic resin. Specifically, when the thermoplastic resin contained in the film material is a propylene homopolymer (melting point: 155 to 167°C), the stretching temperature is preferably from 100 to 164°C. When the thermoplastic resin is a high density polyethylene (melting point: 121 to 134°C), the stretching temperature is preferably from 70 to 133°C. These temperature ranges are temperatures that are 1 to 70°C lower than the melting points of the thermoplastic resins. Furthermore, when the thermoplastic resin contained in the film material is a polyethylene terephthalate (melting point: 246 to 252°C), a temperature that inhibits rapid crystallization is selected.

Furthermore, the stretching rate is preferably from 20 to 350 m/min. By this, the stretching step can be performed stably.

High-concealment easily peelable laminate film (ii)

Next, the high-concealment easily peelable laminate film (ii) of the present invention will be described.

The high-concealment easily peelable laminate film (ii) of the present invention comprises the easily peelable laminate film (i) of the present invention, and a recording layer (D) provided via a concealing layer (C) on a surface side that is not in contact with the peelable surface layer (B) of the base layer (A) contained in the easily peelable laminate film (i) of the present invention.

FIGS. 3 to 5 illustrate specific examples of the high-concealment easily peelable laminate film (ii) of the present invention. In each figure, 50 is the easily peelable laminate film (i), 70 is the concealing layer (C), and 80 is the recording layer (D).

For the description of the easily peelable laminate film (i) of the present invention, the description of the section of "Easily peelable laminate film (i)" above can be referred to. Hereinafter, structures of the concealing layer (C) and the recording layer (D) will be described in detail. Note that, in the description below, for each the surfaces of the high-concealment easily peelable laminate film (ii), a surface on the side of the recording layer (D) is referred to as "front surface" and a surface on the other side relative to the recording layer (D) is referred to as "back surface".

Concealing layer (C)

The concealing layer (C) contained in the high-concealment easily peelable laminate film (ii) is to supplement concealability that is insufficient when only the base layer (A) is used, and provided on a face, which is not in contact with the peelable surface layer (B), of the base layer (A). The concealing layer (C) exhibits a degree of concealability that prevents the information provided below the high-concealment easily peelable laminate film (ii) or the information provided on the peelable surface layer (B) from being identified from the front surface side even when light is irradiated from the back surface side of the high-concealment easily peelable laminate film (ii) to see therethrough.

The concealing layer (C) is preferably a layer containing a colored pigment. Specific examples of the colored pigment include inorganic colored pigments, such as titanium oxide, zinc flower (zinc oxide), iron oxide, chromium oxide, iron black, cobalt blue, alumina white, yellow iron oxide, viridian, zinc sulfide, lithopone, cadmium yellow, cinnabar, cadmium red, chrome yellow, molybdate orange, zinc chromate, strontium chromate, white carbon, clay, talc, ultramarine (marine blue), precipitated barium sulfate, baryta powder, calcium carbonate, white lead, ferrocyanide (prussian blue), phosphate (manganese violet), and carbon (carbon black); and organic colored pigments, such as rhodamine lake, methyl violet lake, quinoline yellow lake, malachite green lake, alizarin lake, carmine 6B, lake red C, disazo yellow, lake red 4R, cromophtal yellow 3G, cromophtal scarlet RN, nickel azo yellow, permanent orange HL, phthalocyanine blue, phthalocyanine green, flavanthrone yellow, thioindigo bordeaux, perinone red, dioxazine violet, quinacridone red, naphthol yellow S, pigment green B, Lumogen yellow, signal red, alkali blue, and aniline black.

Among these colored pigments, black pigments and blue pigments that exhibit high concealability are preferable.

Specific examples include iron black, cobalt blue, ultramarine (marine blue), ferrocyanide (prussian blue), carbon (carbon black), phthalocyanine blue, alkali blue, aniline black, and the like. Among these, the colored pigment preferably contains carbon black.

These colored pigments may be used alone or used by mixing two or more types to adjust hue, concealability, and the like.

The average particle size of the colored pigment used in the concealing layer (C) is preferably in a range of 0.01 to 20 μm, and more preferably in a range of 0.1 to 10 μm. When the average particle size of the colored pigment is less than 0.01 μm, light tends to permeate easily, and sufficient concealability may not be achieved. When the average particle size is greater than 20 μm, dispersibility of the colored pigment is poor and a uniform concealing layer (C) may not be obtained. By setting the average particle size of the colored pigment to be within the range described above, high concealability can be achieved while the colored pigment is uniformly dispersed in the concealing layer (C). Note that, in the present specification, "average particle size" of "colored pigment" refers to an arithmetic mean diameter determined by observing the colored pigment using an electron microscope.

The concealing layer (C) may be formed from one layer in which the colored pigment and an adhesive agent are mixed as illustrated in FIG. 3, or may have a structure in which colored pigment layers 72, 73 and an adhesive layer 71 are provided separately as illustrated in FIGS. 4 and 5. Furthermore, when the colored pigment layer and the adhesive layer are provided separately, a structure in which at least one of the colored pigment layer or the adhesive layer has two or more layers may be employed. For example, as illustrated in FIG. 5, a high-concealment easily peelable laminate film (ii) having higher concealability can be obtained by providing two or more layers of the colored pigment layers 72, 73. The arrangement of the colored pigment layer and the adhesive layer can be appropriately selected depending on the production step. For example, when the high-concealment easily peelable laminate film (ii) is produced by, after the colored pigment layer 72 and the adhesive layer 71 are formed on the surface of the base layer (A) 10, adhering a recording layer (D) 80 on the adhesive layer, the colored pigment layer 72 is arranged on the base layer (A) 10 side and the adhesive layer 71 is arranged on the recording layer (D) 80 side as illustrated in FIG. 4. Furthermore, when the high-concealment easily peelable laminate film (ii) is produced by forming the colored pigment layer 72 and the colored pigment layer 73 on the base layer (A) 10 and the recording layer (D) 80, respectively, then forming an adhesive agent layer 71 on a surface of at least one of the colored pigment layers 72, 73, and adhering one another, the adhesive layer 71 is arranged in between the colored pigment layer 72 and the colored pigment layer 73 as illustrated in FIG. 5.

Examples of the adhesive agent used in the concealing layer (C) include urethane-based adhesive agents, polyether-based adhesive agents, polyester-based adhesive agents, polyurea-based adhesive agents, polyacrylic acid-based adhesive agents, polyamide-based adhesive agents, epoxy-based adhesive agents, and the like. Among these, use of a urethane-based adhesive agent and/or a polyether-based adhesive agent is preferable. One type of these adhesive agents may be used alone or two or more types of these adhesive agents may be used in combination. Furthermore, when the concealing layer (C) is composed of only one layer, use of a polyether-based adhesive agent is preferable. When the concealing layer (C) is composed of a colored pigment layer and an adhesive layer, use of a urethane-based adhesive agent in the adhesive agent of the colored pigment layer and use of a polyether-based adhesive agent in the adhesive layer are preferable.

Furthermore, a crosslinking agent may be added to the concealing layer (C) and the adhesive layer. Examples of the crosslinking agent include isocyanate-based compounds and derivatives thereof, urethane resin-based isocyanate in which polycondensation is performed in a manner that an NCO group is located at a terminal by subjecting a polyhydric alcohol, ether resin, or ester resin to a reaction with an isocyanate-based compound, epoxy-based crosslinking agents, such as glycidyl ether, glycidyl amine, glycidyl ester, and derivatives thereof, melamine-based crosslinking agents, such as melamine and derivatives thereof, and the like.

When the concealing layer (C) is composed of only one layer, the concealing layer (C) is formed by compounding the colored pigment in the adhesive agent. The content of the colored pigment in the concealing layer (C) is preferably from 1 to 80% by mass, more preferably from 3 to 70% by mass, and even more preferably from 5 to 50% by mass. Furthermore, the content of the adhesive agent in the concealing layer (C) is preferably from 99 to 20% by mass, more preferably from 97 to 30% by mass, and even more preferably from 95 to 50% by mass.

When the colored pigment layer and the adhesive layer are separately formed in the concealing layer (C), the content of the colored pigment in the colored pigment layer is preferably from 1 to 80% by mass, more preferably from 3 to 70% by mass, and even more preferably from 5 to 50% by mass. Furthermore, the content of the adhesive agent in the colored pigment layer is preferably from 99 to 20% by mass, more preferably from 97 to 30% by mass, and even more preferably from 95 to 50% by mass. When the content of the colored pigment is 1% by mass or greater, sufficient concealability tends to be achieved, and when the content is 80% by mass or less, it is possible to make a printing layer (D), described below, hard to be peeled off by imparting sufficient strength to the concealing layer.

The thickness of the concealing layer (C) is preferably from 0.1 to 100 μm, more preferably from 0.3 to 70 μm, and even more preferably from 0.5 to 50 μm. When the thickness of the concealing layer (C) is less than 0.1 μm, expected performances cannot be achieved since the concealability becomes ununiform. On the other hand, when the thickness is greater than 100 μm, cohesive force of the concealing layer (C) becomes weak, and the printing layer (D), described below, tends to be easily peeled off. By setting the thickness of the concealing layer (C) to be within the range described above, high concealability can be achieved while peeling of the printing layer (D) is suppressed. Furthermore, when the concealing layer (C) is composed of the colored pigment layer and the adhesive layer, the thickness of the colored pigment layer is preferably from 0.1 to 50 μm, and more preferably from 0.3 to 30 μm. The thickness of the adhesive layer is preferably from 0.1 to 50 μm, and more preferably from 0.3 to 30 μm.

Recording layer (D)

The recording layer (D) contained in the high-concealment easily peelable laminate film (ii) is a layer provided on the easily peelable laminate film (i) via the concealing layer (C) and has recording suitability for printing, sealing, typing, and the like.

For the recording layer (D), natural paper, synthetic paper, resin film, or a laminate having a combination of these can be used, and is appropriately selected depending on operating environment, printing method, durability, and balance of hue of the colored pigment of the concealing layer (C).

Specific examples of the paper used in the recording layer (D) include wood-free paper, wood-containing paper, Kent paper, art paper, coated paper, cast-coated paper, fine coating paper, inkjet coated paper, thermo-sensitive paper, and the like. Specific examples of the resin film include cast polypropylene (CPP), oriented polypropylene (OPP), biaxially oriented polyethylene terephthalate (PET), oriented polystyrene (OPS), PE films, vinyl chloride films, and the like. Specific examples of the synthetic paper include YUPO, manufactured by Yupo Corporation, PEPA, manufactured by Nan Ya Plastics Corporation, and the like.

Furthermore, when the recording layer (D) does not have recording suitability that corresponds to the required printing method, recording suitability can be imparted by providing a publicly known receiving layer, which is suitable for the printing method, on a surface that is not in contact with the concealing layer (C) of the recording layer (D). Examples of the printing method include direct thermal printing method, sublimation thermal transfer printing method, melt thermal transfer printing method, water-based dye inkjet method, water-based pigment inkjet method, solvent-based inkjet method, UV curable inkjet method, liquid toner method, electrophotography method, and the like. The receiving layer serves as a layer containing a color developing material therein and as a layer that receives and fixes the coloring material from outside.

The thickness of the recording layer (D) is preferably from 10 to 500 μm, more preferably from 20 to 400 μm, and even more preferably from 30 to 300 μm. When the thickness of the recording layer (D) is less than 10 μm, sufficient recording suitability may not be obtained since holes are formed due to the insufficient strength of the recording layer (D). Furthermore, when the thickness of the recording layer (D) is greater than 500 μm, stiffness of the high-concealment easily peelable laminate label (iii) is increased, and thus post-processing and/or printing may cause problems when the high-concealment easily peelable laminate label (iii) is used as a concealing seal, re-sticking preventing label, or the like. By setting the thickness of the recording layer (D) to be within the range described above, a high-concealment easily peelable laminate film (ii), in which the recording layer has sufficient strength and on which post-processing and/or printing can be suitably performed, can be obtained.

Total light transmittance

The high-concealment easily peelable laminate film (ii) is a film in which the concealing layer (C) and the recording layer (D) are provided on the easily peelable laminate film (i), and used for purposes that require high concealability. As an indicator of such high concealability, total light transmittance is used for evaluation.

In the present specification, "total light transmittance" is an average value determined from light transmittance (%) of various wavelengths in the range of 400 to 700 nm, measured by using a measurement device in accordance with JIS-P-8118.

The total light transmittance of the high-concealment easily peelable laminate film (ii) of the present invention is preferably from 0 to 5%, more preferably from 0 to 3%, even more preferably from 0 to 2%, and most preferably from 0 to 1%. When the total light transmittance is 5.0% or less, even when intense light is irradiated from the back surface using a light or the like, information provided on the back surface of the high-concealment easily peelable laminate film (ii) or information provided below the high-concealment easily peelable laminate film (ii) is not identified from the front surface, and thus an easily peelable laminate label (iv) having high information concealability can be obtained.

Easily peelable laminate label (iii) and high-concealment easily peelable laminate label (iv)

Next, the easily peelable laminate label (iii) and the high-concealment easily peelable laminate label (iv) of the present invention will be described.

The easily peelable laminate label (iii) of the present invention comprises the easily peelable laminate film (i) of the present invention, and a pressure-sensitive adhesive layer that is provided on a surface, which is on the opposite side relative to the base layer (A), of the peelable surface layer (B) contained in the easily peelable laminate film (i). For the structure of the easily peelable laminate film (i) thereof, the description of the section of "Easily peelable laminate film (i)" above can be referred to. The high-concealment easily peelable laminate label (iv) of the present invention comprises the high-concealment easily peelable laminate film (ii) of the present invention having a concealing layer (C) and a recording layer (D), and a pressure-sensitive adhesive layer that is provided on a surface, which is on the opposite side relative to the base layer (A), of the peelable surface layer (B) contained in the high-concealment easily peelable laminate film (ii). For the structure of the high-concealment easily peelable laminate film (ii) thereof, the description of the section of "High-concealment easily peelable laminate film (ii)" above can be referred to. Here, a pressure-sensitive adhesive layer and a release liner that is provided as necessary, which are contained both in the easily peelable laminate label (iii) and the high-concealment easily peelable laminate label (iv), will be described.

Pressure-sensitive adhesive layer

The pressure-sensitive adhesive layer is preferably provided in direct contact with a surface, which is on the opposite side relative to the base layer (A), of the peelable surface layer (B).

As the pressure-sensitive adhesive used in the pressure-sensitive adhesive layer, pressure-sensitive adhesives such as rubber-based pressure-sensitive adhesives, acrylic pressure-sensitive adhesives, and silicone-based pressure-sensitive adhesive, can be used. Specific examples of the rubber-based pressure-sensitive adhesive include polyisobutylene rubber, butyl rubber, and mixtures of these, and materials in which a tackifier, such as rosin abietate, terpene-phenol copolymer, and terpene-indene copolymer, is blended into such a rubber-based pressure-sensitive adhesive, and the like. Specific examples of the acrylic pressure-sensitive adhesive include substances having a glass transition point of -20°C or lower such as 2-ethylhexylacrylate/n-butyl acrylate copolymers and 2-ethylhexylacrylate/ethyl acrylate/methyl methacrylate copolymers. As the pressure-sensitive adhesive, various forms such as solvent type, emulsion type, and hot melt type can be employed. Furthermore, a heat-sensitive adhesive agent can be used as a raw material of the pressure-sensitive adhesive layer.

The pressure-sensitive adhesive layer may be formed by directly coating the pressure-sensitive adhesive on a surface of the peelable surface layer (B), or may be applied by forming a pressure-sensitive adhesive layer by coating the pressure-sensitive adhesive on a surface of a release liner described below and then applying this on a surface of the peelable surface layer (B).

Examples of the coating device for the pressure-sensitive adhesive include a bar coater, blade coater, comma coater, die coater, air-knife coater, gravure coater, lip coater, reverse coater, roller coater, spray coater, and the like. The pressure-sensitive adhesive layer is formed by, as necessary, smoothing the coated film of the pressure-sensitive adhesive or the like that is coated by such a coating device and then performing a drying step.

The coated amount of the pressure-sensitive adhesive is not particularly limited; however, the coated amount is, in terms of solid content after the drying, preferably in a range of 3 to 60 $g/m^2$, and more preferably in a range of 10 to 40 $g/m^2$.

Furthermore, interlayer peel strength (cohesive force) of the pressure-sensitive adhesive layer is preferably in a range of 100 to 1500 g/cm and is preferably greater than the peel strength of the peelable surface layer (B). Note that the interlayer peel strength of the pressure-sensitive adhesive layer is determined by the peel adhesion strength test stipulated in JIS-K-6854-2. This interlayer peel strength of the pressure-sensitive adhesive layer is similar to "Peel strength of peelable surface layer (B)" described above in terms of being used as an indicator of cohesive force; however, the measurement method is different.

Furthermore, when peeling occurs at the adhesive interface between the easily peelable laminate film (i) and the pressure-sensitive adhesive layer due to small adhesive force therebetween, it is preferable to coat an anchor coating agent on the surface of the peelable surface layer (B) of the easily peelable laminate film (i) before the pressure-sensitive adhesive is coated.

Examples of the anchor coating agent include polyurethane, polyisocyanate/polyetherpolyol, polyisocyanate/polyesterpolyol/polyethyleneimine, alkyl titanate, and the like. These anchor coating agents may be, for example, coated on the surface of the peelable surface layer (B) as a solution in which an anchor coating agent is dissolved in an organic solvent, such as methanol, ethyl acetate, toluene, and hexane, or water.

The coated amount of the anchor coating agent is, in terms of solid content after the drying, preferably in a range of 0.01 to 5 $g/m^2$, and more preferably in a range of 0.02 to 2 $g/m^2$.

Release liner

A release liner is provided as necessary on a surface, which is on the opposite side (adhering surface) relative to the peelable surface layer (B), of the pressure-sensitive adhesive layer to protect the adhering surface of the pressure-sensitive adhesive layer.

As the release liner, wood-free paper or kraft paper can be used as is, or a material which is obtained by subjecting a wood-free paper or kraft paper to calendar processing, resin coating, or film lamination, a material which is obtained by subjecting glassine paper, coated paper, or a plastic film to silicone treatment, or the like can be used. Among these, use of a material which is obtained by subjecting a surface to be in contact with a pressure-sensitive adhesive layer to silicone treatment is preferable from the perspective of achieving excellent releasability from the pressure-sensitive adhesive layer.

Stress at start of peeling

In the present specification, "stress at start of peeling" is a value measured as described below.

In accordance with the method stipulated in JIS-K-6854-2, first, a test piece is produced by cutting the easily peelable laminate label (iii) into a width of 25 mm and a length of 370 mm. Then, a gripping margin is produced by adhering wood-free paper having a thickness of 100 $\mu$m, width of 25 mm, and a length of 200 mm on the adhesive agent, on an end of the test piece. Thereafter, the test piece is adhered on an aluminum plate having a width of 25 mm, a length of 210 mm, and a thickness of 1.5 mm via adhesive agent in a manner that the test piece does not stick out, to obtain a sample for measurement. After this is adjusted in a thermostatic chamber (temperature: 20°C, relative humidity: 65%) environment for 12 hours, the sample is pulled at a tension rate of 300 mm/min using a tensile tester (trade name: Autograph, manufactured by Shimadzu Corporation), and a stress was measured by a load cell when the test piece is peeled off from the aluminum plate at an angle of 180°. Maximum value of the stress was used as the stress at start of peeling. Furthermore, "force at start of peeling" of the high-concealment easily peelable laminate label (iv) is a value measured in the same manner as in the case of easily peelable laminate label (iii) except for using a high-concealment easily peelable laminate label (iv) as the measurement sample in place of easily peelable laminate label (iii).

The stresses at start of peeling of the easily peelable laminate label (iii) and the high-concealment easily peelable laminate label (iv) are preferably 500 g/cm width or less, and more preferably 400 g/cm width or less. By setting the stress at start of peeling to be 500 g/cm width or less, peeling of the base layer (A) can be easily started even when a special processing is not performed. If the stress at start of peeling is greater than 500 g/cm, when peeling of the easily peelable laminate label (iii) or the high-concealment easily peelable laminate label (iv) is attempted in a state that the pressure-sensitive adhesive layer is adhered to an adherend, cohesive failure may occur in the pressure-sensitive adhesive layer, or surface failure of the adherend may occur on which the easily peelable laminate label (iii) or the high-concealment easily peelable laminate label (iv) had been adhered, and thus peeling may not propagate through the peelable surface layer (B) or deformation of the peelable laminate film (i) or the high-concealment easily peelable laminate label (ii) may occur due to the peeling failure. The lower limit of the stress at start of peeling is preferably 10 g/cm width, and more preferably 30 g/cm width. When the stress at start of peeling is 30 g/cm width or greater, occurrence of unexpected peeling with a weak force tends to be prevented after the easily peelable laminate label (iii) or the high-concealment easily peelable laminate label (iv) is adhered.

Peeling mechanism of easily peelable laminate label

Next, the peeling mechanism of the easily peelable laminate label (iii) of the present invention will be described referring to FIGS. 1A to 1C. Note that the same applies to the peeling mechanism of the high-concealment easily peelable laminate label (iv) of the present invention (not illustrated).

As illustrated in FIG. 1A, the easily peelable laminate label (iii) 100 comprises an easily peelable laminate film (i) 50 and a pressure-sensitive adhesive layer 30 that is provided on one surface of the easily peelable laminate film (i) 50. The easily peelable laminate film (i) 50 comprises a base layer 10 and a peelable surface layer 20, and the pressure-sensitive adhesive layer 30 is provided on the surface, which is on the opposite side relative to the base layer 10, of the peelable surface layer 20. Meanwhile, images 60 are printed on the surface, which is on the opposite side relative to the peelable surface layer 20, of the base layer 10. Furthermore, an adhering surface of the pressure-sensitive adhesive layer 30 is adhered to an adherend 40, and by this, the easily peelable laminate label (iii) 100 is held on the adherend 40. Note that, here, the case where the adherend 40 is paper will be explained.

FIG. 1A illustrates the condition immediately after the easily peelable laminate label (iii) 100 is adhered to the adherend 40. From this condition, when the base layer 10 is pulled to peel off the easily peelable laminate label (iii) 100 from the adherend 40, peeling of the base layer 10 starts by causing cohesive failure first in the peelable surface layer 20 having the smallest peel strength among the layers as illustrated in FIG. 1B. Then, as illustrated in FIG. 1C, the peeling of the base layer 10 proceeds as the breakage of the peelable surface layer 20 proceeds, and the base layer 10 is finally separated from the easily peelable laminate label (iii) 100 together with a part of the peelable surface layer 20. At the place where the base layer 10 has been peeled off, only the pressure-sensitive adhesive layer 30 and a part of the peelable surface layer 20 remains.

Because of this, when this easily peelable laminate label (iii) 100 is tried to be forcibly peeled off from the adherend 40, after going through the processes described above, at least a part of the peelable surface layer 20 and the pressure-sensitive adhesive layer 30 are not peeled off and remain on the paper surface (adherend 40). Furthermore, since, when an attempt is made to peel this off forcibly, the paper surface will be damaged, it is possible to clearly confirm that the label 100 has been harmed. Furthermore, since the trace remaining at the part where the base layer 10 has been peeled off is a part of the peelable surface layer 20, problems of the peeled surface becoming sticky and dirt being adhered can be avoided.

Since the easily peelable laminate label (iii) and the high-concealment easily peelable laminate label (iv) of the present invention do not require special processing for starting peeling and since the peelable surface layer (B) peels off with small force, the easily peelable laminate label (iii) and the high-concealment easily peelable laminate label (iv) of the present invention can be advantageously used in various purposes such as delivery slips, concealing seals, re-sticking preventing labels, indelible seals, stickers for application tickets, and coupons and the like.

Printing and typing

On the front and back surfaces of the easily peelable laminate film (i), the front and back surfaces (including the recording layer (D) surface) of the high-concealment easily peelable laminate film (ii), the front and back surfaces of the easily peelable laminate film (i) constituting the easily peelable laminate label (iii), and the front and back surfaces (including the recording layer (D) surface) of the high-concealment easily peelable laminate film (ii) constituting the high-concealment easily peelable laminate label (iv) of the present invention, information and/or design to be displayed may be printed or typed. The information and/or design to be printed or typed includes letters and symbols, diagrams and pictures, and the like. Examples thereof include trade name, name of manufacturer, name of seller, place of origin, expiration date, best before date, lot number, explanation of method of use, precautions for use, hazard statement, GHS classification, note for indicating that peeling-off was performed, storing method, names of ingredients, quantity of content, barcode, two-dimensional code, design for product identification, logo mark, corporate mark, recycling symbol, ticket for application, serial number, character, patterns such as ruled lines, and the like. These can be suitably selected and combined.

As the printing method, for example, sheet - feed offset printing, rotary offset printing, gravure printing, flexo printing, letterpress printing, screen printing, and the like printing methods can be suitably selected for use. As the typing and printing methods, electrophotographic printing, melt thermal transfer printing method, inkjet printing, laser marking, and the like printing and typing method can be suitably selected for use.

The printing and typing may be performed on the easily peelable laminate film (i) or the high-concealment easily peelable laminate film (ii) alone, or may be performed after the easily peelable laminate label (iii) or the high-concealment easily peelable laminate label (iv) is formed by providing a release liner. The printed and/or typed easily peelable laminate label (iii) or high-concealment easily peelable laminate label (iv) is separated into labels of the required shape and dimensions by punching.

Note that, since a dispersing agent is contained in the peelable surface layer (B) in the easily peelable laminate film (i) of the present invention, shedding of inorganic fine powder and/or organic fine powder is unlikely to occur when the easily peelable laminate film (i) passes through a printer, and thus generation of paper powder is suppressed. As a result, letters and images can be printed in high quality on the front and back surfaces of the easily peelable laminate film (i).

Examples

The present invention will be described more specifically below using working examples, comparative examples, and test examples. The materials, used amounts, proportions, operations, and the like described below may be varied as appropriate provided that they do not deviate from the spirit of the present invention. Therefore, the scope of the present invention is not limited by the specific examples given below.

Production and evaluation of easily peelable laminate film (i) and evaluation of easily peelable laminate label (iii)

Table 1 shows raw materials and compositional ratios of resin compositions a to n used in working examples and comparative examples.

[Table 1]

| Name of raw material | | Content | Resin composition compounding ratio (wt.%) | | | | | | |
|---|---|---|---|---|---|---|---|---|---|
| | | | a | b | c | d | e | f | g |
| Thermoplastic resin | Propylene homopolymer | Trade name: NOVATEC-PP FY4, manufactured by Japan Polypropylene Corporation MFR: 5 g/10 min (230°C, 2.16 kg load) Melting point: 162°C (DSC peak temperature) | 59.4 | 49.8 | 49.5 | 49 | 47.6 | 49.5 | 49.5 |
| | Propylene homopolymer | Trade name: NOVATEC-PP MA3, manufactured by Japan Polypropylene Corporation MFR: 11 g/10 min (230°C, 2.16 kg load) | - | - | - | - | - | - | - |
| | High density polyethylene | Trade name: NOVATEC-HD HJ360, manufactured by Japan Polyethylene Corporation MFR: 5.5 g/10 min (190°C, 2.16 kg load) Melting point: 132°C (DSC peak temperature) | 9.9 | 9.95 | 9.9 | 9.8 | 9.52 | 9.9 | 9.9 |
| Inorganic fine powder | Heavy calcium carbonate | Trade name: Softon 1800, manufactured by Bihoku Funka Kogyo Co., Ltd., Dry pulverized and classified product Average particle size: 2.2 μm (median diameter) | 29.7 | 39.8 | 39.6 | 39.2 | 38.1 | 39.6 | 39.6 |

| | | | | | | | | | |
|---|---|---|---|---|---|---|---|---|---|
| Dispersing agent | Maleic acid-modified polypropylene | Trade name: UMEX 1001, manufactured by Sanyo Chemical Industries, Ltd. Acid modification ratio: 5% Softening point: 154°C | 0.99 | 0.5 | 0.99 | 1.96 | 4.76 | - | - |
| | Maleic acid-modified polypropylene | Trade name: UMEX 1010, manufactured by Sanyo Chemical Industries, Ltd. Acid modification ratio: 10% Softening point: 145°C | - | - | - | - | - | 0.99 | - |
| | Silanol-modified polypropylene | Trade name: Linklon PP XPM800H, manufactured by Mitsubishi Chemical Corporation MFR: 11 g/10 min (190°C, 2.16 kg load) | - | - | - | - | - | - | 0.99 |

[Table 1](Continued)

| Name of raw material | | Content | Resin composition compounding ratio (wt.%) | | | | | | |
|---|---|---|---|---|---|---|---|---|---|
| | | | h | i | j | k | l | m | n |
| Thermoplastic resin | Propylene homopolymer | Trade name: NOVATEC-PP FY4, manufactured by Japan Polypropylene Corporation MFR: 5 g/10 min (230°C, 2.16 kg load) Melting point: 162°C (DSC peak temperature) | 34.7 | 70 | 70 | 65 | 60 | 55 | - |
| | Propylene homopolymer | Trade name: NOVATEC-PP MA3, manufactured by Japan Polypropylene Corporation MFR: 11 g/10 min (230°C, 2.16 kg load) | - | - | - | - | - | - | 60 |
| | High density polyethylene | Trade name: NOVATEC-HD HJ360, manufactured by Japan Polyethylene Corporation MFR: 5.5 g/10 min (190°C, 2.16 kg load) Melting point: 132°C (DSC peak temperature) | 9.9 | 20 | 10 | 20 | 10 | 20 | - |
| Inorganic fine powder | Heavy calcium carbonate | Trade name: Softon 1800, manufactured by Bihoku Funka Kogyo Co., Ltd., Dry pulverized and classified product Average particle size: 2.2 μm (median diameter) | 54.5 | 10 | 20 | 15 | 30 | 25 | 40 |
| Dispersing agent | Maleic acid-modified polypropylene | Trade name: UMEX 1001, manufactured by Sanyo Chemical Industries, Ltd. Acid modification ratio: 5% Softening point: 154°C | 0.99 | - | - | - | - | - | - |
| | Maleic acid-modified polypropylene | Trade name: UMEX 1010, manufactured by Sanyo Chemical Industries, Ltd. Acid modification ratio: 10% Softening point: 145°C | - | - | - | - | - | - | - |
| | Silanol-modified polypropylene | Trade name: Linklon PP XPM800H, manufactured by Mitsubishi Chemical Corporation MFR: 11 g/10 min (190°C, 2.16 kg load) | - | - | - | - | - | - | - |

Measurement method of acid modification ratio

In a 10 mL sample vial, 200 mg of acid-modified polyolefin, which was the target of the measurement, and 4800 mg of chloroform were placed, and heated at 50°C for 30 minutes, so that the mixture was completely dissolved.

Then, in a cell which material was NaCl and an optical path length was 0.5 mm, the chloroform solution was placed, and infrared spectra were measured 32 times and integrated using a Fourier transform infrared spectrometer (FT-IR). Similarly, infrared spectra of chloroform only were measured and used as a background.

Separately, infrared spectra of solutions in which maleic anhydride was dissolved in chloroform at various concentrations were measured, and a calibration curve was created using the concentrations and the absorption peak areas of carbonyl groups (in a range of 1750 to 1813 cm$^{-1}$ including the maximum peak around 1780 cm$^{-1}$). Based on the separately created calibration curve, the content of the acid component in the acid-modified polyolefin was calculated in terms of mass and used as the acid modification ratio (% by mass).

Here, as the FT-IR, the FT-IR-410 (trade name), manufactured by JASCO Corporation, can be used.

Production of easily peelable laminate film (i):

[Working Example 1]

The resin composition k was used for the base layer (A) and the resin composition c was used for the peelable surface layer (B), and these were each separately melt-kneaded in an extruder which was set at 230°C. Thereafter, the melt-kneaded materials were fed to a coextrusion die which was set at 250°C and laminated in the die to extrude in a sheet-shape. The extruded material was cooled using a cooling device to obtain an unstretched sheet having a two-layer structure. This unstretched sheet was heated to 130°C and stretched 5-fold in the machine direction utilizing the difference in circumferential speeds of rolls. After the sheet was cooled to a temperature of 60°C, the sheet was heated again to a temperature of 150°C, stretched 8-fold in the transverse direction using a tenter, and then subjected to annealing treatment at a temperature of 162°C. After the sheet was cooled to a temperature of 60°C, edge parts were slit to obtain a multilayer stretched film having a thickness of 61 μm and having a two-layer structure (A/B, thickness of each layer: 60 μm/I μm, number of axis of stretching in each layer: biaxial/biaxial). This was used as the easily peelable laminate film (i). The opacity of the obtained easily peelable laminate film (i) was 86%, and the peel strength of the peelable surface layer (B) was 110 g/cm.

[Working Examples 2 to 5 and Comparative Example 1]

Multilayer stretched films were obtained in the same manner as in Working Example 1 except for changing the resin compositions used in the layer (A) and the layer (B) to those described in Table 2, and changing the thicknesses of the obtained multilayer stretched films to those described in Table 2, and the obtained multilayer stretched films were used as the easily peelable laminate films (i). The opacities of the obtained easily peelable laminate films (i) and the peel strengths of the peelable surface layers (B) are shown in Table 2.

[Working Example 6]

The resin composition m was used for the base layer (A), and this was melt-kneaded in an extruder which was set at 230°C. Thereafter, the melt-kneaded material was fed to an extrusion die which was set at 250°C and extruded in a sheet-shape. The extruded material was cooled using a cooling device to obtain an unstretched sheet having a single layer structure. This unstretched sheet was heated to 130°C and stretched 4-fold in the machine direction utilizing the difference in circumferential speeds of rolls, and then cooled to a temperature of 60°C to obtain a 4-fold stretched film. Then, the resin composition h was used for the peelable surface layer (B) and melt-kneaded in an extruder which was set at 250°C. Thereafter, the melt-kneaded material was fed to an extrusion die which was set at 250°C and extruded in a sheet-shape to laminate it on one surface of the 4-fold stretched film. Thus, a laminate film having a two-layer structure was obtained. After this laminate film having a two-layer structure was cooled to 60°C, the laminate film was heated again to a temperature of 160°C, stretched 7.5-fold in the transverse direction using a tenter, and then subjected to annealing treatment at a temperature of 165°C. After the sheet was cooled to a temperature of 60°C, edge parts were slit to obtain a multilayer stretched film having a thickness of 104 μm and having a two-layer structure (A/B, thickness of each layer: 100 μm/4 μm, number of axis of stretching in each layer: biaxial/uniaxial). This was used as the easily peelable laminate film (i). The opacity of the obtained easily peelable laminate film (i) was 91%, and the peel strength of the peelable surface layer (B) was 150 g/cm.

[Comparative Example 2]

A multilayer stretched film was obtained in the same manner as in Working Example 6 except for using the resin composition k for the base layer (A) and the resin composition e for the peelable surface layer (B), and changing the thickness of the obtained multilayer stretched film to 82 μm (A/B, thickness of each layer: 80 μm/2 μm). The obtained

multilayer stretched film was used as the easily peelable laminate film (i). However, this multilayer stretched film caused significantly large amount of gum on a lip of the die during extrusion forming, and since this caused foreign materials on the film, highly frequent cleaning of the lip was required, and the productivity was poor. The opacity of the obtained easily peelable laminate film (i) was 87%, and the peel strength of the peelable surface layer (B) was 75 g/cm.

[Comparative Example 3]

The laminate film of Working Example 1 of Japanese Unexamined Patent Application Publication No. 2002-113817A was obtained, and this was used as the easily peelable laminate film (i).

Specifically, the resin composition n was used for the peelable surface layer (B), the resin composition j was used for the base layer (A1), and the resin composition 1 was used for the base layer (A2), and these were each separately melt-kneaded in an extruder which was set at 230°C. Thereafter, the melt-kneaded materials were fed to a coextrusion die which was set at 250°C and laminated in the die to extrude in a sheet-shape. The extruded material was cooled using a cooling device to obtain an unstretched sheet having a three-layer structure. This unstretched sheet was heated to 130°C and stretched 5-fold in the machine direction utilizing the difference in circumferential speeds of rolls. After the sheet was cooled to a temperature of 60°C, the sheet was heated again to a temperature of 150°C, stretched 8-fold in the transverse direction using a tenter, and then subjected to annealing treatment at a temperature of 162°C. After the sheet was cooled to a temperature of 60°C, the sheet was subjected to corona discharge treatment, and edge parts were slit to obtain a multilayer stretched film having a thickness of 60 $\mu$m and having a three-layer structure ((B)/(A1)/(A2), thickness of each layer: 1 $\mu$m/49 $\mu$m/10 $\mu$m, number of axis of stretching in each layer: biaxial/biaxial/biaxial). This was used as the easily peelable laminate film (i). The opacity of the obtained easily peelable laminate film (i) was 91%, and the peel strength of the peelable surface layer (B) was 25 g/cm.

Production of easily peelable laminate label (iii):

On a silicone-treated surface of a release liner that was obtained by laminating a polyethylene film on both surfaces of wood-free paper and then performing silicone treatment on one of the surfaces thereof, and that had a thickness of 173 $\mu$m and a density of 0.9 g/cm$^3$, a pressure-sensitive adhesive (trade name: ORIBAIN BPS-1109, manufactured by TOYOCHEM Co., Ltd.) was coated using a comma coater in a manner that the solid content was 25 g/m$^2$, and dried to obtain a pressure-sensitive adhesive layer.

Next, an easily peelable laminate label (iii) having a laminate structure composed of easily peelable laminate film (i)/pressure-sensitive adhesive layer/release liner was obtained by laminating in a manner that the peelable surface layer (B) side of the easily peelable laminate film (i) produced in each of the working examples and comparative examples was in contact with the pressure-sensitive adhesive layer. Furthermore, the stress at start of peeling of the easily peelable laminate label (iii) was measured by the method described above.

Evaluation example

Formability

Formabilities of the easily peelable laminate films (i) obtained in the working examples and comparative examples were evaluated using the following four categories based on the frequency of generation of gum on the die during extrusion forming. The results are shown in Table 2.

Good (◎): Almost no generation of gum on the die during the extrusion forming was observed
Slightly better (○): Although generation of gum on the die during extrusion forming occurred, production was stable for a long time period
Slightly poor (△): Generation of gum on the die during extrusion forming was somewhat frequent, and stable production was only possible for a short time period
Adverse ( × ): Generation of gum on the die during extrusion forming was frequent, and stable production was almost impossible

Test Example

Paper powder

The easily peelable laminate films (i) obtained in the working examples and comparative examples were slit so that the slit films had a width of 200 mm, to produce wounded products having a length of 500 m. Then, offset printing was performed on these in an atmosphere of 20°C and relative humidity of 50% using an intermittent rotary offset press for labels (trade name: MLP13A, manufactured by Miyakoshi Co, Ltd.). After printing label patterns for 5000 shots, paper powder adhered on the blanket of the printer and the condition of the printed article were visually observed. Evaluation was performed using the following four categories.

Good (◎): No adhesion of paper powder was observed and the printed article was not affected
Slightly better (○): Although slight adhesion of paper powder was observed, the printed article was not affected
Slightly poor (△): Adhesion of paper powder was observed, and the printed article was slightly affected
Adverse (×): A large amount of paper powder was adhered and affected the printed article

Peelability (initiation property)

The easily peelable laminate label (iii) produced as described above was cut into a square shape of 5 cm × 5 cm, and adhered on a postal card via pressure-sensitive adhesive layer after the release liner was peeled off. This was used as a sample for evaluating peelability.
One side of the four sides of the easily peelable laminate label (iii) (easily peelable laminate film (i)/pressure-sensitive adhesive layer) on the sample was held by a hand and peeled off from the postal card. Condition of the label until stable peeling started in the peelable surface layer (B) (distance from the label edge) was observed and evaluated using the following four categories. The results are shown in Table 2.

Good (◎): Stable peeling started in less than 2 mm
Slightly better (○): 2 mm or longer but shorter than 5 mm was required to start stable peeling
Slightly poor (△): 5 mm or longer but shorter than 10 mm was required to start stable peeling
Adverse (×): 10 mm or longer was required to start stable peeling

Peelability (propagativity)

On one side of the four sides of the easily peelable laminate label (iii) of the sample described above, pressure-sensitive adhesive tape (trade name: Cellotape CT-18, manufactured by Nichiban Co., Ltd.) was adhered, in a manner overlapping one another, to make a condition in which the sample was easily held by a hand and peeling of the peelable surface layer (B) was easily started. Then, the force for peeling of the peelable surface layer (B) was evaluated using the following four categories based on the load applied to the hand and based on the visual observation of the propagation of peeling of the peelable surface layer (B) when the base layer (A) was peeled off from the postal card by the hand. The results are shown in Table 2.

Good (◎): Force for the peeling was little, and the peeling propagated to the entire surface successfully
Slightly better (○): Force for the peeling was somewhat large but the peeling propagated to the entire surface successfully
Slightly poor (△): Force for the peeling was large but the peeling propagated to the entire surface successfully
Adverse (×): Force for the peeling was extremely large, and the peeling was not propagated to the entire surface and the sample was broken in the middle

Information concealability

For the easily peelable laminate label (iii) of Working Examples 1 to 6 and Comparative Examples 1 to 3, information concealability was evaluated using the method A described below. For the high-concealment easily peelable laminate label (iv) of Working Examples 7 to 12 and Reference Example 1 described below, information concealability was evaluated using the method B described below.

Method A:

On a postal card, 26 letters of alphabet having a character size of 10 point were typed and printed. Then, the release liner of the easily peelable laminate label (iii) was peeled off, and this label was adhered on the surface, on which alphabet was typed and printed, of the postal card to produce a sample for evaluating the information concealability.
The alphabet was visually observed through the easily peelable laminate film (i), and the information concealability was evaluated using the following four categories. The results are shown in Table 2.

Good (◎): Presence of the typed and printed characters were not confirmed

Slightly better (○): Presence of the typed and printed characters were confirmed but it was not possible to identify the characters
Slightly poor (△): Some of the characters were identified
Adverse ( × ): All the characters were identified

Method B:

On a postal card, 26 letters of alphabet having a character size of 10 point were typed and printed. Then, the release liner of the high-concealment easily peelable laminate label (iv) was peeled off, and this label was adhered on the surface, on which alphabet was typed and printed, of the postal card to produce a sample for evaluating the information concealability.

The sample was placed on a backlight panel (trade name: LED trace board, manufactured by AS ONE Corporation). The alphabet was visually observed through the high-concealment easily peelable laminate film (ii), and the information concealability was evaluated using the following four categories. The results are shown in Table 5.

Good (◎): Presence of the typed and printed characters were not confirmed
Slightly better (○): Presence of the typed and printed characters were confirmed but it was not possible to identify the characters
Slightly poor (△): Some of the characters were identified
Adverse ( × ): All the characters were identified

Information identification property

On synthetic paper (trade name: VES85, manufactured by Yupo Corporation), barcode (Code 39) was typed and printed using a barcode printer (trade name: B30, manufactured by TEC K.K.) to produce a sample for barcord reading. Then, the release liner of the easily peelable laminate label (iii) was peeled off and adhered on the barcode of this sample to produce 10 samples, in which barcode was concealed. The base layer (A) of the easily peelable laminate label (iii) was then peeled off from the sample, and the appeared barcord was read by a barcode reader (trade name: LASERCHECK II, manufactured by Fuji Electric Refrigerator Co. Ltd,). The information identification property was evaluated using the following four categories based on the numbers of successful barcord reading per 10 readings. The results are shown in Table 2.

Good (◎): 10 times
Slightly better (○): Less than or equal to 9 times
Slightly poor (△): 2 to 7 times
Adverse (×): 0 to 1 time

[Table 2]

| | Structures of layer A and layer B | | | | | | |
|---|---|---|---|---|---|---|---|
| | Resin composition | | Thickness (µm) | | | Structure of number of axis of stretching | |
| | Peelable surface layer (B) | Base layer (A) (A1/A2) | Total | Peelable surface layer (B) | Base layer (A) (A1/A2) | Peelable surface layer (B) | Base layer (A) (A1/A2) |
| Working Example 1 | c | k | 61 | 1 | 60 | Biaxial | Biaxial |
| Working Example 2 | d | m | 82 | 2 | 80 | Biaxial | Biaxial |
| Working Example 3 | b | m | 82 | 2 | 80 | Biaxial | Biaxial |
| Working Example 4 | f | k | 81 | 1 | 80 | Biaxial | Biaxial |
| Working Example 5 | g | i | 62 | 2 | 60 | Biaxial | Biaxial |
| Working Example 6 | h | m | 104 | 4 | 100 | Uniaxial | Biaxial |
| Comparative example 1 | a | m | 82 | 2 | 80 | Uniaxial | Biaxial |
| Comparative example 2 | e | K | 82 | 2 | 80 | Biaxial | Biaxial |
| Comparative example 3 | n | (j/l) | 60 | 1 | (49/10) | Biaxial | (Biaxial/Biaxial) |

[Table 2] (Continued)

| | Evaluation of easily peelable laminate film (i) | | | | Evaluation of easily peelable laminate film (iii) | | | | |
|---|---|---|---|---|---|---|---|---|---|
| | Formability | Paper powder | Peel strength of peelable surface layer (B) (g/cm) | Opacity (%) | Stress at start of peeling (g/cm) | Peelability | | Information | |
| | | | | | | Initiation property | Propagativity | Concealability Method A | Identification property |
| Working Example 1 | ◎ | ◎ | 110 | 86 | 200 | ○ | ○ | ◎ | ◎ |
| Working Example 2 | ○ | ◎ | 80 | 90 | 150 | ◎ | ◎ | ◎ | ◎ |
| Working Example 3 | ◎ | ○ | 60 | 89 | 170 | ◎ | ◎ | ◎ | ◎ |
| Working Example 4 | ○ | ◎ | 130 | 88 | 220 | ○ | ○ | ◎ | ◎ |
| Working Example 5 | ◎ | ◎ | 75 | 65 | 110 | ◎ | ◎ | ○ | ◎ |
| Working Example 6 | ◎ | ◎ | 150 | 91 | 300 | ○ | ○ | ◎ | ○ |
| Comparative example 1 | ◎ | ◎ | 250 | 88 | 620 | × | × | ◎ | ◎ |
| Comparative example 2 | × | ◎ | 75 | 87 | 160 | ◎ | ◎ | ◎ | ◎ |
| Comparative example 3 | ◎ | × | 25 | 91 | 70 | ◎ | ◎ | ◎ | ◎ |

As shown in Table 2, all of the easily peelable laminate films (i) of Working Examples 1 to 6 had suitable formability and opacity in appropriate ranges, and generations of paper powder thereof during printing were also suppressed. Furthermore, all of the easily peelable laminate labels (iii) of Working Examples 1 to 6 had stress at start of peeling in appropriate ranges and suitable peelability while having excellent information concealability and visibility.

On the other hand, the easily peelable laminate film (i) of Comparative Example 3, in which the peelable surface layer had no dispersing agent, generated a large amount of paper powder during printing, and the printed article was affected.

Production of high-concealment easily peelable laminate film (ii)

Raw materials and contents of the concealing layer (C) used in working examples and reference example were shown in Table 3. Raw materials and contents of the recording layer (D) used in working examples and reference example were shown in Table 4.

[Table 3]

| Examples of concealing layer (C) | Content |
|---|---|
| Colored pigment layer (1) | A concealing coating material obtained by blending 60% by mass of urethane-based binder resin (trade name: NEW-LP Super R Medium, manufactured by Toyo Ink Co., Ltd.) with 40% by mass of carbon black having an average particle size of 21 nm (trade name: TOKABLACK #7550F, manufactured by Tokai Carbon Co., Ltd.) and diluting with toluene so that the solid concentration was adjusted to 30% by mass |
| Colored pigment layer (2) | A concealing adhesive coating material obtained by blending, to a mixture of 55% by mass of polyether-based adhesive agent (trade name: TM-317, manufactured by Toyo-Morton, Ltd.) and 38% by mass of curing agent (trade name: CAT-11B, manufactured by Toyo-Morton, Ltd.) with 7% by mass of carbon black having an average particle size of 21 nm (trade name: TOKABLACK #7550F, manufactured by Tokai Carbon Co., Ltd.) and diluting with ethyl acetate so that the solid concentration was adjusted to 35% by mass |
| Adhesive layer (1) | An adhesive coating material obtained by diluting a mixture of 60% by mass of polyether-based adhesive agent (trade name: TM-317, manufactured by Toyo-Morton, Ltd.) and 40% by mass of curing agent (trade name: CAT-11B, manufactured by Toyo-Morton, Ltd.) with toluene so that the solid concentration was adjusted to 25% by mass |

[Table 4]

| Examples of recording layer (D) | Content |
|---|---|
| Recording layer 1 | Synthetic paper (trade name: SGS-60, manufactured by Yupo Corporation; thickness: 60 $\mu$m) was used |
| Recording layer 2 | Light weight coated paper (trade name: OK Coat L, manufactured by Oji Paper Co., Ltd.; thickness: 54 $\mu$m) was used |
| Recording layer 3 | Thermo-sensitive paper (trade name: PD150R, manufactured by Oji Paper Co., Ltd.; thickness: 75 $\mu$m) was used |

[Working Example 7]

Production of high-concealment easily peelable laminate film (ii):

On the surface on the base layer (A) side of the easily peelable laminate film (i) obtained in Working Example 1, the coating material of colored pigment layer (1) shown in Table 3 was coated using a gravure coater and dried using a fan dryer at 70°C. Thereafter, the adhesive layer shown in Table 3 was coated on the colored pigment layer (1) using a gravure coater, and dried using a fan dryer at 50°C. Thereafter, the recording layer 1 shown in Table 4 was adhered to obtain a high-concealment easily peelable laminate film (ii) having a concealing layer.

The total thickness of the layers of the obtained high-concealment easily peelable laminate film (ii) was 125 $\mu$m, and the total light transmittance measured by the method described below was 0.02%. The layer structure (easily peelable surface layer (B)/base layer (A)/concealing layer (C)/ recording layer (D)) and results thereof are shown in Table 5.

Production of high-concealment easily peelable laminate label (iv):

In the same manner as in "Production of easily peelable laminate label (iii)", a high-concealment easily peelable laminate label (iv) having a laminate structure composed of high-concealment easily peelable laminate film (ii)/pressure-sensitive adhesive layer/release liner was obtained by laminating a release liner having an adhesive layer, in a manner that the peelable surface layer (B) side of the high-concealment easily peelable laminate film (ii) described above was in contact with the pressure-sensitive adhesive layer.

Evaluation of the information concealability of the obtained high-concealment easily peelable laminate label (iv) by the method B was "◎". This result is shown in Table 5.

[Working Examples 8 and 9]

High-concealment easily peelable laminate films (ii) and high-concealment easily peelable laminate labels (iv) were obtained in the same manner as in Working Example 7 except for using an easily peelable laminate film (i) obtained in Working Example 2 or 3 in place of the easily peelable laminate film (i) obtained in Working Example 1. The layer structures (easily peelable surface layer (B)/base layer (A)/concealing layer (C)/ recording layer (D)) and evaluation results thereof are shown in Table 5.

[Working Example 10]

On the surface on the base layer (A) side of the easily peelable laminate film (i) obtained in Working Example 4, the coating material of colored pigment layer (2) shown in Table 3 was coated using a gravure coater and dried using a fan dryer at 50°C. Thereafter, the recording layer 1 shown in Table 4 was adhered to obtain a high-concealment easily peelable laminate film (ii) having a concealing layer.

Then, a high-concealment easily peelable laminate label (iv) was obtained similarly as in Working Example 7. The layer structure (easily peelable surface layer (B)/base layer (A)/concealing layer (C)/ recording layer (D)) and evaluation results thereof are shown in Table 5.

[Working Examples 11 and 12]

High-concealment easily peelable laminate films (ii) and high-concealment easily peelable laminate labels (iv) were obtained in the same manner as in Working Example 10 except for using an easily peelable laminate film (i) obtained in Working Example 5 or 6 in place of the easily peelable laminate film (i) obtained in Working Example 4. The layer structures (easily peelable surface layer (B)/base layer (A)/concealing layer (C)/ recording layer (D)) and evaluation results thereof are shown in Table 5.

[Reference Example 1]

On the surface on the base layer (A) side of the easily peelable laminate film (i) obtained in Working Example 1, the coating material of adhesive layer (1) shown in Table 3 was coated using a gravure coater and dried using a fan dryer at 50°C. Thereafter, the recording layer 1 shown in Table 4 was adhered to obtain an easily peelable laminate film having an adhesive layer.

Then, an easily peelable laminate label was obtained similarly as in Working Example 7. The layer structure (easily peelable surface layer (B)/base layer (A)/concealing layer (C)/ recording layer (D)) and evaluation results thereof are shown in Table 5. However, evaluation of the information concealability of the obtained easily peelable laminate label by the method B was "×".

Test Example

Total light transmittance

The high-concealment easily peelable laminate film (ii) described above was cut into a size of 5 cm × 5 cm, and the condition was adjusted in an environment of a chamber temperature of 23°C and relative humidity of 50% for 24 hours. Thereafter, transmittances (%) of every 5 nm in the range of 400 to 700 nm were measured using a measurement device (U-3310, manufactured by Hitachi, Ltd.) in accordance with JIS-P-8118, and the average value thereof was determined as the total light transmittance.

[Table 5]

| | | Layer structure of high-concealment easily peelable laminate film (iii) | | | | | | | | Evaluation of high-concealment easily peelable laminate label (iv) |
|---|---|---|---|---|---|---|---|---|---|---|---|
| | | Structure of easily peelable laminate film (i) | | | | Concealing layer (C) | | Recording layer (D) | Total thickness of layers ($\mu$m) | Total light transmittance (%) | |
| | | Resin composition | | Thickness ($\mu$m) | | | | | | | |
| | | Peelable surface layer (B) | Base layer (A) | Peelable surface layer (B) | Base layer (A) | Structure | Thickness ($\mu$m) | | | | Information concealability by method B |
| Working Examples | 7 | c | k | 1 | 60 | Colored pigment layer (1)/adhesive layer (1) | 2/2 | Recording layer 1 | 125 | 0.02 | ◎ |
| | 8 | d | m | 2 | 80 | Colored pigment layer (1)/adhesive layer (1) | 5/2 | Recording layer 3 | 164 | 0.01 | ◎ |
| | 9 | b | m | 2 | 80 | Colored pigment layer (1)/adhesive layer (1) | 10/2 | Recording layer 1 | 154 | 0.00 | ◎ |
| | 10 | f | k | 1 | 80 | Colored pigment layer (2) | 2 | Recording layer 1 | 143 | 1.70 | ○ |
| | 11 | g | i | 2 | 60 | Colored pigment layer (2) | 5 | Recording layer 1 | 127 | 0.62 | ◎ |
| | 12 | h | m | 4 | 100 | Colored pigment layer (2) | 10 | Recording layer 2 | 168 | 0.35 | ◎ |
| Reference Example | 1 | c | k | 1 | 60 | Adhesive layer (1) | 2 | Recording layer 1 | 123 | 7.30 | × |

27

As shown in Table 5, all of the high-concealment easily peelable laminate films (ii) of Working Examples 7 to 12 and Reference Example 1 were films in which a concealing layer (C) and a recording layer (D) were provided on the easily peelable laminate film of one of Working Examples 1 to 6, the high-concealment easily peelable laminate films (ii) exhibited opacity, generation of paper powder during printing, and stress at start of peeling in suitable ranges, and had excellent peelability and excellent information concealability and visibility.

Compared to the high-concealment easily peelable laminate film (ii) of Reference Example 1 in which no colored pigment was used in the concealing layer (C), total light transmittances of the easily peelable laminate films (ii) of Working Examples 7 to 12, in which a colored pigment was used in the concealing layer (C), were suppressed to low values. Furthermore, the evaluation result of the information concealability by method B of the high-concealment easily peelable laminate film (ii) of Reference Example 1 was poor; however, on the other hand, the evaluation results of information concealability by method B of the high-concealment easily peelable laminate films (ii) of Working Examples 7 to 12 were "good" or "slightly better", and thus it was confirmed that these films had high concealability.

Industrial Applicability

According to the present invention, the easily peelable laminate film (i), the easily peelable laminate label (iii), the high-concealment easily peelable laminate film (ii), and the high-concealment easily peelable laminate label (iv) do not require special processing to start peeling, and the peelable surface layers (B) peel off by applying small force. Among these, the high-concealment easily peelable laminate film (ii) and the high-concealment easily peelable laminate label (iv) have significantly high concealability. Utilizing these properties, the present invention can be advantageously used in various purposes, such as delivery slips, concealing seals, re-sticking preventing labels, indelible seals, stickers for application tickets, and coupons, depending on the information concealability requirements. Therefore, the present invention is highly industrially applicable.

Reference Signs List

10 Base layer
20 Peelable surface layer
30 Pressure-sensitive adhesive layer
40 Adherend
50 Easily peelable laminate film (i)
70 Concealing layer (C)
71 Adhesive layer
72 Colored pigment layer
73 Colored pigment layer
80 Recording layer (D)
90 High-concealment easily peelable laminate film (ii)
100 Easily peelable laminate label (iii)

**Claims**

1. An easily peelable laminate film (i) formed by laminating a base layer (A) containing at least a thermoplastic resin and a peelable surface layer (B);
the peelable surface layer (B) containing from 18.18 to 89.99% by mass of thermoplastic resin, from 9.09 to 79.99% by mass of at least one of inorganic fine powder or organic fine powder, and from 0.01 to 4.00% by mass of dispersing agent; and the easily peelable laminate film (i) having a peel strength of 5 to 150 g/cm width.

2. The easily peelable laminate film (i) according to claim 1, wherein the dispersing agent contains at least one of acid-modified polyolefin or silanol-modified polyolefin.

3. The easily peelable laminate film (i) according to claim 2, wherein an acid modification ratio of the acid-modified polyolefin is from 0.01 to 20% by mass.

4. The easily peelable laminate film (i) according to any one of claims 1 to 3, wherein the dispersing agent contains maleic anhydride-modified polyolefin.

**5.** The easily peelable laminate film (i) according to any one of claims 1 to 3, wherein the dispersing agent contains at least one of maleic anhydride-modified polypropylene or silanol-modified polypropylene.

**6.** The easily peelable laminate film (i) according to any one of claims 1 to 5, wherein the base layer (A) contains from 40 to 100% by mass of the thermoplastic resin and from 0 to 60% by mass of at least one of inorganic fine powder or organic fine powder; and the total content of the fine powders of the inorganic fine powder and the organic fine powder in the base layer (A) is less by 8% by mass or more, than the total content of the fine powders of the inorganic fine powder and the organic fine powder in the peelable surface layer (B).

**7.** The easily peelable laminate film (i) according to any one of claims 1 to 6, wherein the base layer (A) and the peelable surface layer (B) are stretched in a uniaxial direction in a condition where the base layer (A) and the peelable surface layer (B) are laminated.

**8.** The easily peelable laminate film (i) according to any one of claims 1 to 7, wherein a film thickness of the base layer (A) is from 10 to 500 $\mu$m, and a film thickness of the peelable surface layer (B) is from 0.1 to 10 $\mu$m.

**9.** The easily peelable laminate film (i) according to any one of claims 1 to 8, wherein an opacity of the easily peelable laminate film (i) is from 60 to 100%.

**10.** A high-concealment easily peelable laminate film (ii) comprising: the easily peelable laminate film (i) described in any one of claims 1 to 9; and a recording layer (D) provided via a concealing layer (C) on a surface side, the surface being not in contact with the peelable surface layer (B), of the base layer (A) contained in the easily peelable laminate film (i).

**11.** The high-concealment easily peelable laminate film (ii) according to claim 10, wherein a total light transmittance is from 0 to 5%.

**12.** The high-concealment easily peelable laminate film (ii) according to claim 10 or 11, wherein the concealing layer (C) contains from 1 to 80% by mass of colored pigment.

**13.** The high-concealment easily peelable laminate film (ii) according to claim 10 or 11, wherein the concealing layer (C) has at least two layers which are a colored pigment layer containing from 1 to 80% by mass of colored pigment and an adhesive layer.

**14.** The high-concealment easily peelable laminate film (ii) according to claim 12 or 13, wherein the concealing layer (C) has at least two layers of colored pigment layers containing from 1 to 80% by mass of colored pigment.

**15.** The high-concealment easily peelable laminate film (ii) according to any one of claims 10 to 14, wherein the concealing layer (C) contains at least one of black pigment or blue pigment.

**16.** The high-concealment easily peelable laminate film (ii) according to claim 15, wherein the black pigment contains carbon black.

**17.** The high-concealment easily peelable laminate film (ii) according to any one of claims 10 to 16, wherein the recording layer (D) contains at least one of natural paper, synthetic paper, or resin films.

**18.** The high-concealment easily peelable laminate film (ii) according to any one of claims 10 to 17, wherein a film thickness of the concealing layer (C) is from 0.1 to 100 $\mu$m, and a film thickness of the recording layer (D) is from 10 to 500 $\mu$m.

**19.** An easily peelable laminate label (iii) comprising the easily peelable laminate film (i) described in any one of claims 1 to 9; and a pressure-sensitive adhesive layer that is provided on a surface, the surface being on the opposite side relative to the base layer (A), of the peelable surface layer (B) contained in the easily peelable laminate film (i).

**20.** The easily peelable laminate label (iii) according to claim 19, further comprising a release liner provided on a surface, the surface being on the opposite side relative to the peelable surface layer (B), of the pressure-sensitive adhesive layer.

21. The easily peelable laminate label (iii) according to claim 19 or 20, wherein a stress at start of peeling is 500 g/cm width or less.

22. A high-concealment easily peelable laminate label (iv) comprising the high-concealment easily peelable laminate film (ii) described in any one of claims 10 to 17; and a pressure-sensitive adhesive layer that is provided on a surface, the surface being on the opposite side relative to the base layer (A), of the peelable surface layer (B) contained in the high-concealment easily peelable laminate film (ii).

23. The high-concealment easily peelable laminate label (iv) according to claim 22, further comprising a release liner provided on a surface, the surface being on the opposite side relative to the peelable surface layer (B), of the pressure-sensitive adhesive layer.

24. The high-concealment easily peelable laminate label (iv) according to claim 22 or 23, wherein a stress at start of peeling is 500 g/cm width or less.

FIG. 1

FIG. 2

FIG. 3

FIG. 4

FIG. 5

## INTERNATIONAL SEARCH REPORT

| | International application No. |
|---|---|
| | PCT/JP2014/072736 |

| A. CLASSIFICATION OF SUBJECT MATTER |
|---|
| B32B7/06(2006.01)i, B32B27/20(2006.01)i |

According to International Patent Classification (IPC) or to both national classification and IPC

| B. FIELDS SEARCHED |
|---|

Minimum documentation searched (classification system followed by classification symbols)
B32B1/000-43/00

| Documentation searched other than minimum documentation to the extent that such documents are included in the fields searched |
|---|
| Jitsuyo Shinan Koho 1922-1996 Jitsuyo Shinan Toroku Koho 1996-2014 |
| Kokai Jitsuyo Shinan Koho 1971-2014 Toroku Jitsuyo Shinan Koho 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2002/002312 A1 (Yupo Corp.), 10 January 2002 (10.01.2002), claims & EP 1306206 A1 claims & JP 2002-113817 A & US 2003/0152735 A1 & US 2007/0116914 A1 & AT 525203 T | 1-24 |
| Y | WO 2012/002510 A1 (Yupo Corp.), 05 January 2012 (05.01.2012), claims; paragraph [0040] & US 2013/0164471 A1 claims; paragraphs [0078] to [0082] & JP 2012-215799 A & JP 2012-214005 A & CN 102971144 A | 1-24 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 November, 2014 (18.11.14) | 25 November, 2014 (25.11.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2014/072736

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-280026 A (Yupo Corp.), 13 October 2005 (13.10.2005), claims; paragraphs [0021], [0022] (Family: none) | 10-18,22-24 |
| A | WO 2004/011534 A1 (Yupo Corp.), 05 February 2004 (05.02.2004), claims & EP 1553126 A1 claims & JP 2004-347658 A    & JP 2004-68017 A & JP 2004-114676 A    & JP 2004-255864 A & US 2005/0186371 A1   & AU 2003252689 A & KR 10-2005-0037558 A  & CN 1684999 A & KR 10-1003925 B1     & CN 1520992 A | 1-24 |

Form PCT/ISA/210 (continuation of second sheet) (July 2009)

**EP 3 040 197 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H899377A B
- JP H10258476A B
- JP 2002113817 A